# EUROPEAN PATENT APPLICATION

(11) **EP 4 746 454 A1**
(43) Date of publication of application: **20.05.2026**
(21) Application number: 24838678.1
(22) Date of filing: 04.07.2024
(51) Int. Cl.: H04W 4/029

(54) **COMMUNICATION PROCESSING METHODS, APPARATUS, DEVICE AND READABLE STORAGE MEDIUM**

(30) Priority: 10.07.2023 CN 202310845881
(71) Applicant: Vivo Mobile Communication Co., Ltd., Dongguan, Guangdong 523863 (CN)
(72) Inventor: HE, Ranran, Dongguan, Guangdong 523863 (CN); ZHANG, Yanxia, Dongguan, Guangdong 523863 (CN)
(74) Representative: Walaski, Jan Filip
(86) International application number: PCT/CN2024/103507
(87) International publication number: WO 2025/011423

(57) **Abstract**

The present application relates to the technical field of communications. Disclosed are communication processing methods, an apparatus, a device and a readable storage medium. One method comprises: according to first information and at least one of satellite assistance information used for accessing an NTN, a terminal acquires a reference position of a target cell, the first information being used for acquisition of the reference position of the target cell. The target cell comprises at least one of a first candidate cell, a serving cell and a neighboring cell, the first candidate cell being a candidate cell for conditional handover, and the neighboring cell being a neighboring cell of the serving cell.

## Description

### CROSS-REFERENCE TO RELATED APPLICATIONS

This application claims priority to Chinese Patent Application No. 202310845881.6, filed in China on July 10, 2023, which is incorporated herein by reference in its entirety.

### TECHNICAL FIELD

This application pertains to the field of communication technologies, and specifically relates to a communication processing method and apparatus, a device, and a readable storage medium.

### BACKGROUND

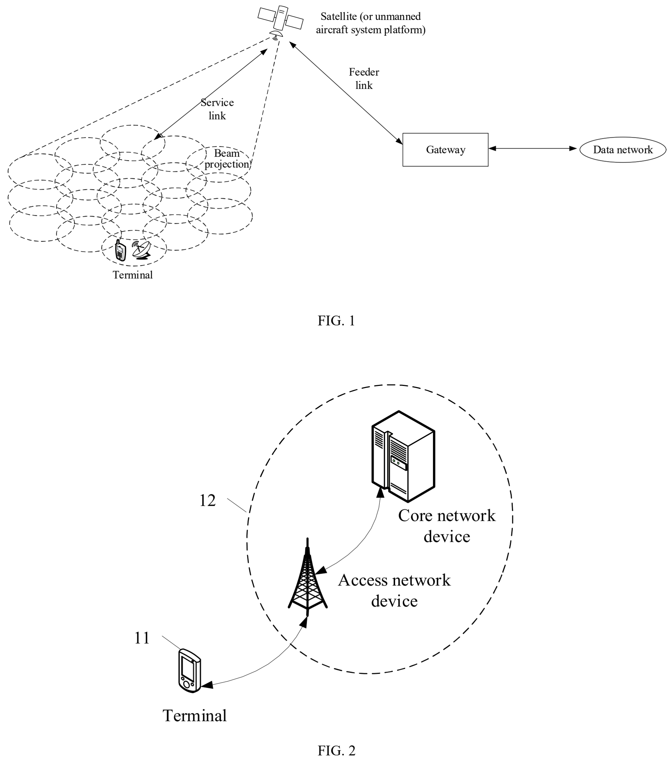

A non-terrestrial communication network (Non-Terrestrial Network, NTN) refers to a network or a network segment that performs transmission by using a satellite or an unmanned aircraft system (Unmanned Aircraft System, UAS) platform. Compared with a terrestrial communication system, a satellite-based non-terrestrial communication system has wider coverage. Typical applicable scenarios include situations in which terrestrial base stations cannot be constructed and terrestrial base stations are damaged, such as continuous coverage in remote mountainous areas, deserts, oceans, and forests, or emergency communication when natural disasters occur and terrestrial base stations are damaged. Satellites include low earth orbit (Low Earth Orbit, LEO) satellites, medium earth orbit (Medium Earth Orbit, MEO) satellites, geostationary earth orbit (Geostationary Earth Orbit, GEO) satellites, and highly elliptical orbit (Highly Elliptical Orbit, HEO) satellites. Typical scenarios of the non-terrestrial network include: (1) a transparent forwarding mode in which a satellite serves as a forwarding relay, as shown in FIG. 1, and (2) a signal regeneration mode in which a satellite directly serves as a base station. For the transparent forwarding mode, a link between the satellite and a terminal is a service link, and a link between the satellite and a terrestrial base station is a feeder link.

In a non-terrestrial communication network scenario, a reference location of an earth-moving cell changes with time. How the terminal quickly and accurately determines the reference location to reduce signaling overheads caused by the change of the reference location is not clear currently.

### SUMMARY

Embodiments of this application provide a communication processing method and apparatus, a device, and a readable storage medium to resolve a problem of how a terminal determines a reference location to reduce signaling overheads caused by a change of the reference location.

According to a first aspect, a communication processing method is provided and includes:
obtaining, by a terminal, a reference location of a target cell based on at least one of first information and satellite assistance information used for accessing an NTN, where
the first information is used to obtain the reference location of the target cell; and
the target cell includes at least one of a first candidate cell, a serving cell, and a neighboring cell, where the first candidate cell is a candidate cell for conditional handover, and the neighboring cell is a neighboring cell of the serving cell.

According to a second aspect, a communication processing method is provided and includes:
sending, by a network-side device, at least one of first information and satellite assistance information used for accessing an NTN to a terminal, where at least one of the first information and the satellite assistance information used for accessing the NTN is used to obtain a reference location of a target cell, the first information is used to obtain the reference location of the target cell, and the target cell includes at least one of a first candidate cell, a serving cell, and a neighboring cell, where the first candidate cell is a candidate cell for conditional handover, and the neighboring cell is a neighboring cell of the serving cell.

According to a third aspect, a communication processing apparatus is provided and includes:
a first obtaining module, configured to obtain a reference location of a target cell based on at least one of first information and satellite assistance information used for accessing an NTN, where
the first information is used to obtain the reference location of the target cell; and
the target cell includes at least one of a first candidate cell, a serving cell, and a neighboring cell, where the first candidate cell is a candidate cell for conditional handover, and the neighboring cell is a neighboring cell of the serving cell.

According to a fourth aspect, a communication processing apparatus is provided and includes:
a sending module, configured to send at least one of first information and satellite assistance information used for accessing an NTN to a terminal, where at least one of the first information and the satellite assistance information used for accessing the NTN is used to obtain a reference location of a target cell, the first information is used to obtain the reference location of the target cell, and the target cell includes at least one of a first candidate cell, a serving cell, and a neighboring cell, where the first candidate cell is a candidate cell for conditional handover, and the neighboring cell is a neighboring cell of the serving cell.

According to a fifth aspect, a communication device is provided and includes a processor, a memory, and a program or instructions stored in the memory and capable of running on the processor. When the program or instructions are executed by the processor, the steps of the method according to the first aspect or the second aspect are implemented.

According to a sixth aspect, a readable storage medium is provided. The readable storage medium stores a program or instructions. When the program or instructions are executed by a processor of a terminal, the steps of the method according to the first aspect or the second aspect are implemented.

According to a seventh aspect, a chip is provided. The chip includes a processor and a communication interface. The communication interface is coupled to the processor. The processor is configured to run a program or instructions to implement the steps of the method according to the first aspect or the second aspect.

According to an eighth aspect, a computer program or program product is provided. The computer program or program product is stored in a non-transitory storage medium. The program or program product is executed by at least one processor to implement the steps of the method according to the first aspect or the second aspect.

According to a ninth aspect, a communication system is provided. The communication system includes a terminal and a network-side device. The terminal is configured to perform the steps of the method according to the first aspect. The network-side device configured to perform the steps of the method according to the second aspect.

In the embodiments of this application, the terminal may obtain the reference location of the target cell based on at least one of the first information used for obtaining the reference location of the target cell and the satellite assistance information used for accessing the NTN, so that the terminal can autonomously and quickly obtain the reference location of the target cell in an NTN network scenario, thereby reducing signaling overheads caused by a change of the reference location of the target cell.

### BRIEF DESCRIPTION OF DRAWINGS

FIG. 1 is a schematic diagram of a non-terrestrial network based on transparent forwarding;
FIG. 2 is a schematic diagram of an architecture of a wireless communication system according to an embodiment of this application;
FIG. 3 is a first flowchart of a communication processing method according to an embodiment of this application;
FIG. 4 is a second flowchart of a communication processing method according to an embodiment of this application;
FIG. 5 is a first schematic diagram of a communication processing apparatus according to an embodiment of this application;
FIG. 6 is a second schematic diagram of a communication processing apparatus according to an embodiment of this application;
FIG. 7 is a schematic diagram of a terminal according to an embodiment of this application;
FIG. 8 is a schematic diagram of a network-side device according to an embodiment of this application; and
FIG. 9 is a schematic diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "or" in this application indicates at least one of connected objects. For example, "A or B" covers three schemes, that is, scheme 1: including A and excluding B; scheme 2: including B and excluding A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as follows: A sender explicitly notifies a receiver, in a sent indication, of content such as specific information, an operation to be performed, or a result being requested. The indirect indication may be understood as follows: A receiver determines corresponding information based on an indication sent by a sender, or makes a decision and determines, based on a decision result, an operation to be performed or a result being requested, or the like.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in this application are usually used interchangeably. The described technologies may be used for the foregoing systems and radio technologies, and may also be used for other systems and radio technologies. In the following descriptions, a new radio (New Radio, NR) system is described for an illustrative purpose, and NR terms are used in most of the following descriptions. These technologies may also be applied to other systems than the NR system, for example, a 6th Generation (6^{th} Generation, 6G) communication system.

First, the following technical points are described to facilitate understanding of the embodiments of this application.

### 1. Earth-fixed cells (Earth-fixed cells) and earth-moving cells (Earth-moving cells).

A low earth orbit satellite moves in the air with time, and two types of cells may be deployed:

Earth-moving cell: The cell (ground coverage area) moves with time.

Quasi-earth-fixed cell (Quasi-earth-fixed cell): The cell covers one geographical area in a period of time and covers a different geographical area in another period of time (for example, the satellite can implement this scenario by generating a steerable beam).

In addition, there is another type of cell as follows:
Earth-fixed cell: The cell always covers a same geographical area (such as cell coverage provided by a geosynchronous satellite).

### 2. Location-based conditional handover (location-based CHO)/Location-based measurement event (location-based measurement event).

Because the satellite is far away from the ground, reference signal received power (Reference Signal Received Power, RSRP) or reference signal received quality (Reference Signal Received Quality, RSRQ) or a signal to interference plus noise ratio (Signal to Interference plus Noise Ratio, SINR) of a neighboring cell measured by a terminal may be approximate to RSRP or RSRQ or an SINR of a serving cell, and execution of conditional handover (Conditional Handover, CHO) triggered solely based on signal strength or signal quality is inaccurate. Therefore, a distance-based CHO trigger event is introduced in the related art.

Similarly, triggering of measurement reporting also has the same problem. Therefore, a distance-based measurement reporting event is also introduced in the related art.

FIG. 2 is a block diagram of a wireless communication system to which an embodiment of this application may be applied. The wireless communication system includes a terminal 11 and a network-side device 12.

The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR) or virtual reality (virtual reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a home device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. In addition to the foregoing terminal devices, the terminal in this application may be a chip in a terminal, such as a modem (Modem) chip or a system-on-chip (System on Chip, SoC). It should be noted that a specific type of the terminal 11 is not limited in the embodiments of this application.

The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (evolved NodeB, eNB), a next generation NodeB (next generation NodeB, gNB), a new radio NodeB (New Radio NodeB, NR NodeB), an access point, a relay node (Relay Node, RN), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (Home NodeB, HNB), a home evolved NodeB, a transmission reception point (Transmission Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

A communication processing method and apparatus, a communication device, and a readable storage medium provided in embodiments of this application are hereinafter described in detail by using some embodiments and application scenarios thereof with reference to the accompanying drawings.

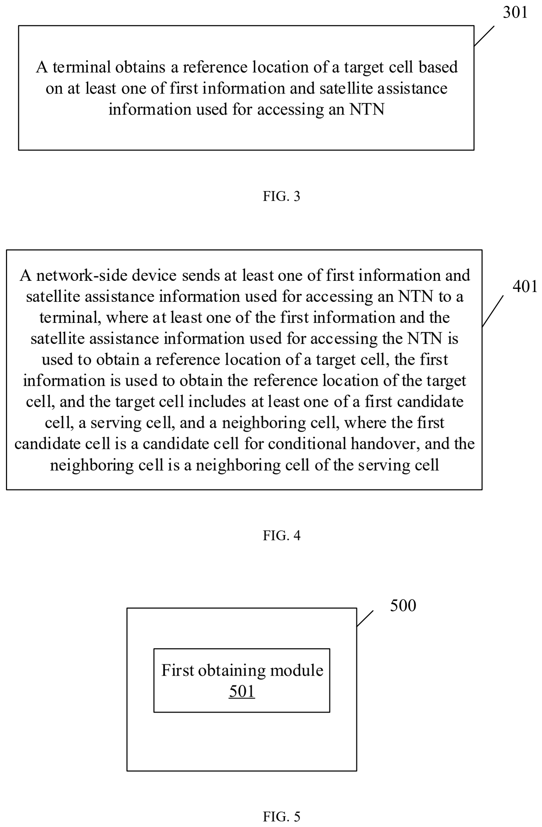

Referring to FIG. 3, an embodiment of this application provides a communication processing method, which is performed by a terminal. A specific step is as follows:
Step 301: The terminal obtains a reference location of a target cell based on at least one of first information and satellite assistance information used for accessing an NTN, where
the first information is used to obtain the reference location of the target cell; and
the target cell includes at least one of a first candidate cell, a serving cell, and a neighboring cell, where the first candidate cell is a candidate cell for conditional handover, and the neighboring cell is a neighboring cell of the serving cell.

In an implementation of this application, the terminal is in a connected state.

For example, the terminal in the connected state may estimate the reference location of the target cell based on a reference location, an epoch time (epochTime), and ephemeris information that are provided in the first information. For another example, the terminal in the connected state may ignore a reference location provided in the first information, and the terminal estimates the reference location of the target cell based on a reference location, an epoch time, and ephemeris information that are provided in the satellite assistance information used for accessing the NTN. For another example, the terminal in the connected state may estimate the reference location of the target cell based on a reference location provided in the first information, and an epoch time and ephemeris information that are provided in the satellite assistance information used for accessing the NTN. In this way, the terminal can obtain the reference location of the target cell autonomously and quickly, thereby reducing signaling overheads caused by a change of the reference location of the target cell.

In an implementation of this application, the satellite assistance information used for accessing the NTN is carried by system information. For example, the system information may be a system information block (System Information Block, SIB) 19. The first information is carried by dedicated signaling. For example, the dedicated signaling may be radio resource control (Radio Resource Control, RRC) reconfiguration (RRC Reconfiguration) signaling.

It should be noted that the system information and dedicated signaling are not specifically limited in this embodiment.

In an implementation of this application, the first information includes second information, where the second information may be used for the terminal to evaluate and perform CHO, and the second information may also be referred to as a location-based CHO related configuration.

The second information includes at least one of the following:
(1) A first reference location, where the first reference location is a reference location of the serving cell at a first time.

It may be understood that the reference location of the serving cell at the first time can be represented by a moving reference location (movingReferenceLocation) field in a protocol, that is, a reference location of the serving cell of an NTN earth moving system at a time reference (Reference location of the serving cell of an NTN Earth moving system at a time reference).

### (2) The first time.

Optionally, the first time meets at least one of the following:
(a) the first time and ephemeris information of the serving cell are used for the terminal to obtain the reference location of the serving cell;
(b) a time unit of the first time is one of the following: a frame, a subframe, a slot, a symbol, a second, a millisecond, and a microsecond, where
   if the first time is represented by a frame and/or a subframe, the terminal considers that the first time (represented by a system frame number (System Frame Number, SFN) or a subframe number in this field) is one of the following: the SFN in this field represents a current SFN or a next upcoming SFN after a frame in which a message indicating the first time is received; and it is closest to the frame in which the message indicating the first time is received;
(c) the first time is an absolute time, such as universal time coordinated (Universal Time Coordinated, UTC); and
(d) a timing reference for the first time is the serving cell, that is, the frame number or subframe number indicated in the first time is a frame number or subframe number of the serving cell.

Optionally, the first time is in the form of an epoch time, that is, it is represented by an SFN or a subframe.

### (3) Ephemeris information of the serving cell.

### (4) A second reference location, where the second reference location is a reference location of the first candidate cell at a second time.

### (5) The second time.

Optionally, the second time meets at least one of the following:
(a) the second time and ephemeris information of the first candidate cell are used for the terminal to obtain the reference location of the first candidate cell;
(b) a time unit of the second time is one of the following: a frame, a subframe, a slot, a symbol, a second, a millisecond, and a microsecond, where
   if the second time is represented by a frame and/or a subframe, the terminal considers that the second time (represented by an SFN or a subframe number in this field) is one of the following: the SFN in this field represents a current SFN or a next upcoming SFN after a frame in which a message indicating the second time is received; and it is closest to the frame in which the message indicating the second time is received;
(c) the second time is an absolute time, such as UTC; and
(d) a timing reference for the second time is one of the following: the serving cell, that is, the frame number or subframe number indicated in the second time is a frame number or subframe number of the serving cell; and the first candidate cell, that is, the frame number or subframe number indicated in the second time is a frame number or subframe number of the first candidate cell.

Optionally, the second time is in the form of an epoch time, that is, it is represented by an SFN or a subframe.

### (6) Ephemeris information of the first candidate cell.

(7) A first indication, where the first indication is used to indicate at least one of the following: the terminal needs to estimate the reference location of the serving cell, the terminal is enabled to estimate the reference location of the serving cell, and the terminal is requested to estimate the reference location of the serving cell.

Optionally, the second information may not directly carry the first indication, but may implicitly indicate, by using other information in the second information, the foregoing content indicated by the first indication. For example, in a case that the second information does not include the first indication, if the second information includes the first time and/or the ephemeris information of the serving cell, it indicates that the terminal needs to estimate the reference location of the serving cell, that is, the first time or the ephemeris information of the serving cell may implicitly indicate the foregoing content indicated by the first indication.

### (8) A type of the serving cell.

Optionally, the type of the serving cell is one of the following: an earth-moving cell (earth-moving cell), a quasi-earth-fixed cell (quasi-earth-fixed cell), and an earth-fixed cell (earth-fixed cell).

Optionally, the second information may not directly carry the type of the serving cell, but may implicitly indicate the type of the serving cell by using other information in the second information or the satellite assistance information used for accessing the NTN. For example, in a case that the second information does not include the type of the serving cell, if the second information includes the first time or the ephemeris information of the serving cell, it indicates that the type of the serving cell is an earth-moving cell. For another example, if the satellite assistance information used for accessing the NTN includes referencelocation-r17 (referenceLocation-r17), it indicates that the type of the serving cell is a quasi-earth-fixed cell. For another example, if the satellite assistance information used for accessing the NTN includes the reference location of the serving cell at the epoch time of the serving cell, it indicates that the type of the serving cell is an earth-moving cell.

(9) A second indication, where the second indication is used to indicate at least one of the following: the terminal needs to estimate the reference location of the first candidate cell, the terminal is enabled to estimate the reference location of the first candidate cell, and the terminal is requested to estimate the reference location of the first candidate cell.

Optionally, the second information may not directly carry the second indication, but may implicitly indicate, by using other information in the second information, the foregoing content indicated by the second indication. For example, in a case that the second information does not include the second indication, if the second information includes the second time or the ephemeris information of the first candidate cell, it indicates that the terminal needs to estimate the reference location of the first candidate cell, that is, the second time or the ephemeris information of the first candidate cell may implicitly indicate the foregoing content indicated by the second indication.

### (10) A type of the first candidate cell.

Optionally, the type of the first candidate cell is one of the following: an earth-moving cell, a quasi-earth-fixed cell, and an earth-fixed cell.

Optionally, the second information may not directly carry the type of the first candidate cell, but may implicitly indicate the type of the first candidate cell by using other information in the second information or the satellite assistance information used for accessing the NTN. For example, if the second information includes the second time and/or the ephemeris information of the first candidate cell, it indicates that the type of the first candidate cell is an earth-moving cell.

In an implementation of this application, in a case that the first information includes the second information, that the terminal obtains a reference location of a target cell based on first information includes at least one of the following:
(1) the terminal estimates the reference location of the serving cell based on the second information; and
(2) the terminal estimates the reference location of the first candidate cell based on the second information.

In an implementation of this application, after the terminal estimates the reference location of the serving cell based on the second information or the terminal estimates the reference location of the first candidate cell based on the second information, the method further includes at least one of the following:
the terminal performs CHO trigger event evaluation based on the estimated reference location of the serving cell; and
the terminal performs CHO trigger event evaluation based on the estimated reference location of the first candidate cell.

In an implementation of this application, that the terminal estimates the reference location of the serving cell based on the second information includes:
in a case that a first condition is met, the terminal estimates the reference location of the serving cell based on the second information, where
the first condition includes at least one of the following:
   (1) the type of the serving cell is an earth-moving cell; and
   (2) the second information includes the first indication.

In an implementation of this application, in a case that the second information includes the first reference location, the first time, and the ephemeris information of the serving cell, that the terminal estimates the reference location of the serving cell based on the second information includes:
the terminal estimates the reference location of the serving cell based on the first reference location, the first time, and the ephemeris information of the serving cell.

In an implementation of this application, that the terminal estimates the reference location of the first candidate cell based on the second information includes:
in a case that a second condition is met, the terminal estimates the reference location of the first candidate cell based on the second information, where
the second condition includes at least one of the following:
   (1) the type of the first candidate cell is an earth-moving cell; and
   (2) the second information includes the second indication.

In an implementation of this application, in a case that the second information includes the second reference location, the second time, and the ephemeris information of the first candidate cell, that the terminal estimates the reference location of the first candidate cell based on the second information includes:
the terminal estimates the reference location of the first candidate cell based on the second reference location, the second time, and the ephemeris information of the first candidate cell.

In this embodiment, the terminal in the connected state may estimate the reference location of the serving cell or the first candidate cell based on the reference location, epoch time, and ephemeris information that are provided in the first information, and perform CHO trigger event evaluation based on the estimated reference location of the serving cell or the first candidate cell.

In an implementation of this application, the first information includes third information, where the third information may be used for the terminal to evaluate and perform CHO, and the third information may also be referred to as a location-based CHO related configuration. The third information includes at least one of the following:

### (1) A third reference location.

The third reference location is a reference location of the serving cell, for example, a reference location 1 (referenceLocation1) in CondEventDl in the related art. For example, the third reference location may be provided by using dedicated signaling.

### (2) A fourth reference location.

The fourth reference location is a reference location of the first candidate cell, for example, a reference location 2 (referenceLocation2) in CondEventD2 in the related art. For example, the fourth reference location may be provided by using dedicated signaling.

(3) A third indication, where the third indication is used to indicate at least one of the following: the terminal needs to estimate the reference location of the serving cell, the terminal is enabled to estimate the reference location of the serving cell, and the terminal is requested to estimate the reference location of the serving cell.

Optionally, the third information may not directly carry the third indication, but may implicitly indicate, by using other information in the third information, the foregoing content indicated by the third indication. For example, in a case that the third information does not include the third indication, if the third information includes a type of the serving cell and the type of the serving cell is an earth-moving cell, it indicates that the terminal needs to estimate the reference location of the serving cell, that is, the type of the serving cell may implicitly indicate the foregoing content indicated by the third indication.

### (4) The type of the serving cell.

(5) A fourth indication, where the fourth indication is used to indicate at least one of the following: the terminal needs to estimate the reference location of the first candidate cell, the terminal is enabled to estimate the reference location of the first candidate cell, and the terminal is requested to estimate the reference location of the first candidate cell.

Optionally, the third information may not directly carry the fourth indication, but may implicitly indicate, by using other information in the third information, the foregoing content indicated by the fourth indication. For example, in a case that the third information does not include the fourth indication, if the third information includes a type of the first candidate cell and the type of the first candidate cell is an earth-moving cell, it indicates that the terminal needs to estimate the reference location of the first candidate cell, that is, the type of the first candidate cell may implicitly indicate the foregoing content indicated by the fourth indication.

### (6) The type of the first candidate cell.

The third reference location meets at least one of the following:
(a) the third reference location is the reference location of the serving cell at a third time; and
(b) the third reference location is the same as a fifth reference location, and the fifth reference location is the reference location of the serving cell at the third time.

The third time is an epoch time of NTN assistance information of the serving cell, and the third time, the fifth reference location, and the NTN assistance information of the serving cell are included in the satellite assistance information used for accessing the NTN, for example, the third time, the fifth reference location, and the NTN assistance information of the serving cell are provided by a SIB 19.

The fourth reference location meets at least one of the following:
(a) the fourth reference location is the reference location of the first candidate cell at a fourth time; and
(b) the fourth reference location is the same as a sixth reference location, and the sixth reference location is a reference location of a first cell at the fourth time.

The fourth time is an epoch time of NTN assistance information of the first cell, the first cell is a cell that has a same frequency and a same physical cell identifier (Physical Cell Identifier, PCI) as the first candidate cell, and the sixth reference location, the fourth time, the NTN assistance information of the first cell, and the PCI of the first cell are included in the satellite assistance information used for accessing the NTN. For example, the sixth reference location, the fourth time, the NTN assistance information of the first cell, and the PCI of the first cell are provided by a SIB 19.

In an implementation of this application, in a case that the first information includes the third information, that the terminal obtains a reference location of a target cell based on at least one of first information and satellite assistance information used for accessing an NTN includes at least one of the following:
(1) the terminal estimates the reference location of the serving cell based on the third information and the satellite assistance information used for accessing the NTN; and
(2) the terminal estimates the reference location of the first candidate cell based on the third information and the satellite assistance information used for accessing the NTN.

In an implementation of this application, after the terminal estimates the reference location of the serving cell based on the third information and the satellite assistance information used for accessing the NTN or the terminal estimates the reference location of the first candidate cell based on the third information and the satellite assistance information used for accessing the NTN, the method further includes at least one of the following:
the terminal performs CHO trigger event evaluation based on the estimated reference location of the serving cell; and
the terminal performs CHO trigger event evaluation based on the estimated reference location of the first candidate cell.

In an implementation of this application, that the terminal estimates the reference location of the serving cell based on the third information and the satellite assistance information used for accessing the NTN includes:
in a case that a third condition is met, the terminal estimates the reference location of the serving cell based on the third information and the satellite assistance information used for accessing the NTN, where
the third condition includes at least one of the following:
   (1) the type of the serving cell is an earth-moving cell; and
   (2) the third information includes the third indication.

In an implementation of this application, in a case that the third information includes the third reference location and that the satellite assistance information used for accessing the NTN includes ephemeris information of the serving cell and the third time, that the terminal estimates the reference location of the serving cell based on the third information and the satellite assistance information used for accessing the NTN includes:
the terminal estimates the reference location of the serving cell based on the third reference location, the ephemeris information of the serving cell, and the third time.

In an implementation of this application, that the terminal estimates the reference location of the first candidate cell based on the third information and the satellite assistance information used for accessing the NTN includes:
in a case that a fourth condition is met, the terminal estimates the reference location of the first candidate cell based on the third information and the satellite assistance information used for accessing the NTN, where
the fourth condition includes at least one of the following:
   (1) the type of the first candidate cell is an earth-moving cell; and
   (2) the third information includes the fourth indication.

In an implementation of this application, in a case that the third information includes the fourth reference location and that the satellite assistance information used for accessing the NTN includes ephemeris information of the first cell and the fourth time, that the terminal estimates the reference location of the first candidate cell based on the third information and the satellite assistance information used for accessing the NTN includes:
the terminal estimates the reference location of the first candidate cell based on the fourth reference location, the ephemeris information of the first cell, and the fourth time.

In an implementation of this application, in a case that the terminal re-obtains satellite assistance information used for accessing the NTN, the method further includes at least one of the following:
the terminal estimates the reference location of the serving cell based on the re-obtained satellite assistance information used for accessing the NTN, where the re-obtained satellite assistance information used for accessing the NTN includes at least one of the following: a reference location of the serving cell at an eleventh time, the eleventh time, and ephemeris information of the serving cell, where the eleventh time is an epoch time of the NTN assistance information of the serving cell; and
the terminal estimates the reference location of the first candidate cell based on the re-obtained satellite assistance information for accessing the NTN, where the re-obtained satellite assistance information for accessing the NTN includes at least one of the following: a reference location of a fifth cell at a twelfth time, the twelfth time, and ephemeris information of the fifth cell, where the fifth cell is a cell that has a same frequency and a same PCI as the first candidate cell, and the twelfth time is an epoch time of the ephemeris information of the fifth cell.

Optionally, that the terminal re-obtains satellite assistance information used for accessing the NTN includes at least one of the following:
(1) T430 of the serving cell expires;
(2) NTN assistance information of any neighboring cell is invalid;
(3) the terminal re-obtains, based on an implementation, the satellite assistance information used for accessing the NTN; and
(4) the terminal considers that the current satellite assistance information used for accessing the NTN is invalid, and re-obtains the satellite assistance information used for accessing the NTN.

In an implementation of this application, in a case that the terminal re-obtains satellite assistance information used for accessing the NTN, the method further includes at least one of the following:
the terminal considers (or determines) that a most recently estimated reference location of the serving cell is the reference location of the serving cell; and
the terminal considers (or determines) that a most recently estimated reference location of the first candidate cell is the reference location of the first candidate cell.

In this embodiment, the terminal in the connected state may estimate the reference location of the target cell based on the reference location provided in the first information, and the epoch time and the ephemeris information that are provided in the satellite assistance information used for accessing the NTN. Further, if the terminal re-obtains the satellite assistance information used for accessing the NTN, the terminal estimates the reference location of the serving cell or the first candidate cell based on the epoch time and the ephemeris information that are provided in the updated satellite assistance information used for accessing the NTN, or if the terminal re-obtains the satellite assistance information used for accessing the NTN, the terminal considers that the most recently estimated reference location of the serving cell is the reference location of the serving cell or considers that the most recently estimated reference location of the first candidate cell is the reference location of the first candidate cell. In this way, signaling overheads can be reduced, and CHO trigger event evaluation is performed based on the estimated reference location of the serving cell or the first candidate cell.

In an implementation of this application, the first information includes fourth information, where the fourth information may be used for the terminal to evaluate and perform CHO, and the fourth information may also be referred to as a location-based CHO related configuration. The fourth information includes at least one of the following:
(1) A seventh reference location, where the seventh reference location is a reference location of the serving cell, that is, a reference location 1 (referenceLocation1) in condEventD1 in the related art.
(2) An eighth reference location, where the eighth reference location is a reference location of the first candidate cell, that is, a reference location 2 (referenceLocation2) in condEventD1 in the related art.
(3) A fifth indication, where the fifth indication is used to indicate at least one of the following: the terminal needs to estimate the reference location of the serving cell, the terminal is enabled to estimate the reference location of the serving cell, and the terminal is requested to estimate the reference location of the serving cell.

Optionally, the fourth information may not directly carry the fifth indication, but may implicitly indicate, by using other information in the fourth information, the foregoing content indicated by the fifth indication. For example, in a case that the fourth information does not include the fifth indication, if the fourth information includes a type of the serving cell and the type of the serving cell is an earth-moving cell, it indicates that the terminal needs to estimate the reference location of the serving cell, that is, the type of the serving cell may implicitly indicate the foregoing content indicated by the fifth indication.

### (4) The type of the serving cell.

(5) A sixth indication, where the sixth indication is used to indicate at least one of the following: the terminal needs to estimate the reference location of the first candidate cell, the terminal is enabled to estimate the reference location of the first candidate cell, and the terminal is requested to estimate the reference location of the first candidate cell.

Optionally, the fourth information may not directly carry the sixth indication, but may implicitly indicate, by using other information in the fourth information, the foregoing content indicated by the sixth indication. For example, in a case that the fourth information does not include the sixth indication, if the fourth information includes a type of the first candidate cell and the type of the first candidate cell is an earth-moving cell, it indicates that the terminal needs to estimate the reference location of the first candidate cell, that is, the type of the first candidate cell may implicitly indicate the foregoing content indicated by the sixth indication.

### (6) The type of the first candidate cell.

In an implementation of this application, in a case that the first information includes the fourth information, that the terminal obtains a reference location of a target cell based on at least one of first information and satellite assistance information used for accessing an NTN includes at least one of the following:
the terminal ignores at least part of the fourth information, and the terminal estimates the reference location of the serving cell based on the satellite assistance information used for accessing the NTN; and
the terminal ignores at least part of the fourth information, and the terminal estimates the reference location of the first candidate cell based on the satellite assistance information used for accessing the NTN.

In an implementation of this application, after the terminal ignores at least part of the fourth information, and the terminal estimates the reference location of the serving cell based on the satellite assistance information used for accessing the NTN, or after the terminal ignores at least part of the fourth information, and the terminal estimates the reference location of the first candidate cell based on the satellite assistance information used for accessing the NTN, the method further includes at least one of the following:
the terminal performs CHO trigger event evaluation based on the estimated reference location of the serving cell; and
the terminal performs CHO trigger event evaluation based on the estimated reference location of the first candidate cell.

In an implementation of this application, that the terminal ignores at least part of the fourth information, and the terminal estimates the reference location of the serving cell based on the satellite assistance information used for accessing the NTN includes:
in a case that a fifth condition is met, the terminal ignores at least part of the fourth information, and the terminal estimates the reference location of the serving cell based on the satellite assistance information used for accessing the NTN, where
the fifth condition includes at least one of the following:
   (1) the type of the serving cell is an earth-moving cell; and
   (2) the fourth information includes the fifth indication.

In an implementation of this application, in a case that the fourth information includes the seventh reference location and that the satellite assistance information used for accessing the NTN includes a reference location of the serving cell at a ninth time, the ninth time, and ephemeris information of the serving cell, that the terminal ignores at least part of the fourth information, and the terminal estimates the reference location of the serving cell based on the satellite assistance information used for accessing the NTN includes:
the terminal ignores the seventh reference location, and the terminal estimates the reference location of the serving cell based on the reference location of the serving cell at the ninth time, the ninth time, and the ephemeris information of the serving cell, where the ninth time is an epoch time of NTN assistance information of the serving cell.

Optionally, the reference location of the serving cell at the ninth time may include a moving track of the serving cell or a moving track of the reference location of the serving cell.

Optionally, the reference location of the serving cell at the ninth time, the ninth time, and the ephemeris information of the serving cell may be provided by a SIB 19.

In an implementation of this application, that the terminal ignores at least part of the fourth information, and the terminal estimates the reference location of the first candidate cell based on the satellite assistance information used for accessing the NTN includes:
in a case that a sixth condition is met, the terminal ignores at least part of the fourth information, and the terminal estimates the reference location of the first candidate cell based on the satellite assistance information used for accessing the NTN, where
the sixth condition includes at least one of the following:
   (1) the type of the first candidate cell is an earth-moving cell; and
   (2) the fourth information includes the sixth indication.

In an implementation of this application, in a case that the fourth information includes the eighth reference location and that the satellite assistance information used for accessing the NTN includes a reference location of a third cell at a tenth time, the tenth time, and ephemeris information of the third cell, that the terminal ignores at least part of the fourth information, and the terminal estimates the reference location of the first candidate cell based on the satellite assistance information used for accessing the NTN includes:
the terminal ignores the eighth reference location, and the terminal estimates the reference location of the first candidate cell based on the reference location of the third cell at the tenth time, the tenth time, and the ephemeris information of the third cell, where the third cell is a cell that has a same frequency and a same PCI as the first candidate cell, and the tenth time is an epoch time of NTN assistance information of the serving cell.

Optionally, the reference location of the first candidate cell includes a moving track of the first candidate cell or a moving track of the reference location of the first candidate cell.

The reference location of the third cell at the tenth time, the tenth time, the ephemeris information of the third cell, and the PCI of the third cell are provided by a SIB 19.

In this embodiment, the terminal in the connected state may ignore the reference location provided in the first information, and the terminal in the connected state estimates the reference location of the serving cell or the first candidate cell based on the reference location, the epoch time, and the ephemeris information that are provided in the satellite assistance information used for accessing the NTN, and performs CHO trigger event evaluation based on the estimated reference location of the serving cell or the first candidate cell.

In an implementation of this application, the first information includes fifth information, where the fifth information is used for the terminal to perform neighboring cell measurement and perform measurement reporting, and the fifth information may also be referred to as a location-based measurement reporting configuration. The fifth information includes at least one of the following:
(1) A ninth reference location, where the ninth reference location is a reference location of the serving cell at a fifth time.
(2) The fifth time.

Optionally, the fifth time meets at least one of the following:
(a) the fifth time and ephemeris information of the serving cell are used for the terminal to obtain the reference location of the serving cell;
(b) a time unit of the fifth time is one of the following: a frame, a subframe, a slot, a symbol, a second, a millisecond, and a microsecond, where
   if the fifth time is represented by a frame or a subframe, the terminal considers that the fifth time (represented by a system frame number (System Frame Number, SFN) or a subframe number in this field) is one of the following: the SFN in this field represents a current SFN or a next upcoming SFN after a frame in which a message indicating the fifth time is received; and it is closest to the frame in which the message indicating the fifth time is received;
(c) the fifth time is an absolute time, such as universal time coordinated (Universal Time Coordinated, UTC); and
(d) a timing reference for the fifth time is the serving cell, that is, the frame number or subframe number indicated in the fifth time is a frame number or subframe number of the serving cell.

Optionally, the fifth time is in the form of an epoch time, that is, it is represented by an SFN or a subframe.

### (3) Ephemeris information of the serving cell.

(4) At least one tenth reference location, where the tenth reference location is a reference location of one neighboring cell at a sixth time.

(5) At least one sixth time, where one sixth time corresponds to one tenth reference location.

Optionally, the sixth time meets at least one of the following:
(a) the sixth time and ephemeris information of the neighboring cell are used for the terminal to obtain the reference location of the neighboring cell;
(b) a time unit of the sixth time is one of the following: a frame, a subframe, a slot, a symbol, a second, a millisecond, and a microsecond, where
   if the sixth time is represented by a frame or a subframe, the terminal considers that the sixth time (represented by an SFN or a subframe number in this field) is one of the following: the SFN in this field represents a current SFN or a next upcoming SFN after a frame in which a message indicating the sixth time is received; and it is closest to the frame in which the message indicating the sixth time is received;
(c) the sixth time is an absolute time, such as UTC; and
(d) a timing reference for the sixth time is one of the following: the serving cell, that is, the frame number or subframe number indicated in the sixth time is a frame number or subframe number of the serving cell; and the neighboring cell, that is, the frame number or subframe number indicated in the sixth time is a frame number or subframe number of the neighboring cell.

Optionally, the sixth time is in the form of an epoch time, that is, it is represented by an SFN or a subframe.

(6) Ephemeris information of at least one neighboring cell, where ephemeris information of one neighboring cell corresponds to one tenth reference location.

(7) A seventh indication, where the seventh indication is used to indicate at least one of the following: the terminal needs to estimate the reference location of the serving cell, the terminal is enabled to estimate the reference location of the serving cell, and the terminal is requested to estimate the reference location of the serving cell.

Optionally, the fifth information may not directly carry the seventh indication, but may implicitly indicate, by using other information in the fifth information, the foregoing content indicated by the seventh indication. For example, in a case that the fifth information does not include the seventh indication, if the fifth information includes the sixth time or the ephemeris information of the serving cell, it indicates that the terminal needs to estimate the reference location of the serving cell, that is, the sixth time or the ephemeris information of the serving cell may implicitly indicate the foregoing content indicated by the seventh indication.

### (8) A type of the serving cell.

(9) A type of at least one neighboring cell, where the type of one neighboring cell corresponds to one neighboring cell.

(10) At least one eighth indication, where one eighth indication corresponds to one neighboring cell, and the eighth indication is used to indicate at least one of the following: the terminal needs to estimate a reference location of the neighboring cell, the terminal is enabled to estimate the reference location of the neighboring cell, and the terminal is requested to estimate the reference location of the neighboring cell.

### (11) Frequency information of at least one neighboring cell.

### (12) A PCI of at least one neighboring cell.

Optionally, the fifth information may not directly carry the eighth indication, but may implicitly indicate, by using other information in the fifth information, the foregoing content indicated by the eighth indication. For example, in a case that the fifth information does not include the eighth indication, if the fifth information includes the sixth time or the ephemeris information of the neighboring cell, it indicates that the terminal needs to estimate the reference location of the neighboring cell, that is, the sixth time or the ephemeris information of the neighboring cell may implicitly indicate the foregoing content indicated by the eighth indication.

In an implementation of this application, in a case that the first information includes the fifth information, that the terminal obtains a reference location of a target cell based on first information includes at least one of the following:
(1) the terminal estimates the reference location of the serving cell based on the fifth information; and
(2) the terminal estimates the reference location of the neighboring cell based on the fifth information.

In an implementation of this application, after the terminal estimates the reference location of the serving cell based on the fifth information or the terminal estimates the reference location of the neighboring cell based on the fifth information, the method further includes at least one of the following:
the terminal performs measurement reporting trigger event evaluation based on the estimated reference location of the serving cell; and
the terminal performs measurement reporting trigger event evaluation based on the estimated reference location of the neighboring cell.

In an implementation of this application, that the terminal estimates the reference location of the serving cell based on the fifth information includes:
in a case that a seventh condition is met, the terminal estimates the reference location of the serving cell based on the fifth information, where
the seventh condition includes at least one of the following:
   (1) the type of the serving cell is an earth-moving cell; and
   (2) the fifth information includes the seventh indication.

In an implementation of this application, in a case that the fifth information includes the ninth reference location, the fifth time, and the ephemeris information of the serving cell, that the terminal estimates the reference location of the serving cell based on the fifth information includes:
the terminal estimates the reference location of the serving cell based on the ninth reference location, the fifth time, and the ephemeris information of the serving cell.

In an implementation of this application, that the terminal estimates the reference location of the neighboring cell based on the fifth information includes:
in a case that an eighth condition is met, the terminal estimates the reference location of the neighboring cell based on the fifth information, where
the eighth condition includes at least one of the following:
   (1) the type of the neighboring cell is an earth-moving cell; and
   (2) the fifth information includes the eighth indication corresponding to the neighboring cell.

In an implementation of this application, in a case that the fifth information includes the at least one tenth reference location, the at least one sixth time, and the ephemeris information of the at least one neighboring cell, that the terminal estimates the reference location of the neighboring cell based on the fifth information includes:
the terminal estimates a reference location of a first neighboring cell based on one tenth reference location, one sixth time, and ephemeris information of one neighboring cell, where the first neighboring cell is a neighboring cell corresponding to the sixth time, the tenth reference location, and the ephemeris information of the neighboring cell.

In this embodiment, the terminal in the connected state may estimate the reference location of the serving cell or the neighboring cell based on the reference location, epoch time, and ephemeris information that are provided in the first information, and perform measurement reporting trigger event evaluation based on the estimated reference location of the serving cell or the neighboring cell.

In an implementation of this application, the first information includes sixth information, where the sixth information is used for the terminal to perform neighboring cell measurement and perform measurement reporting, and the sixth information may also be referred to as a location-based measurement reporting configuration. The sixth information includes at least one of the following:
(1) An eleventh reference location, where the eleventh reference location is a reference location of the serving cell, for example, a reference location 1 (referenceLocationl) in EventD1.
(2) At least one twelfth reference location, where one twelfth reference location is a reference location of one neighboring cell, and if a network provides only one twelfth reference location, the twelfth reference location is specifically, for example, a reference location 2 (referenceLocation2) in EventD1.
(3) Frequency information of at least one neighboring cell.
(4) A PCI of at least one neighboring cell, where the PCI of one neighboring cell corresponds to one neighboring cell.
(5) A ninth indication, where the ninth indication is used to indicate at least one of the following: the terminal needs to estimate the reference location of the serving cell, the terminal is enabled to estimate the reference location of the serving cell, and the terminal is requested to estimate the reference location of the serving cell.

Optionally, the sixth information may not directly carry the ninth indication, but may implicitly indicate, by using other information in the sixth information, the foregoing content indicated by the ninth indication. For example, in a case that the sixth information does not include the ninth indication, if the sixth information includes a type of the serving cell, it indicates that the terminal needs to estimate the reference location of the serving cell, that is, the type of the serving cell may implicitly indicate the foregoing content indicated by the ninth indication.

### (6) The type of the serving cell.

(7) At least one tenth indication, where one tenth indication corresponds to one neighboring cell, and the tenth indication is used to indicate at least one of the following: the terminal needs to estimate a reference location of the neighboring cell, the terminal is enabled to estimate the reference location of the neighboring cell, and the terminal is requested to estimate the reference location of the neighboring cell.

Optionally, the sixth information may not directly carry the tenth indication, but may implicitly indicate, by using other information in the sixth information, the foregoing content indicated by the tenth indication. For example, in a case that the sixth information does not include the tenth indication, if the sixth information includes a type of at least one neighboring cell, it indicates that the terminal needs to estimate a reference location of at least one neighboring cell, that is, the type of at least one neighboring cell may implicitly indicate the foregoing content indicated by the tenth indication.

(8) The type of at least one neighboring cell, where the type of one neighboring cell corresponds to one neighboring cell.

The eleventh reference location meets at least one of the following:
(a) the eleventh reference location is the reference location of the serving cell at a seventh time; and
(b) the eleventh reference location is the same as a thirteenth reference location, and the thirteenth reference location is the reference location of the serving cell at the seventh time.

The seventh time is an epoch time of NTN assistance information of the serving cell, and the seventh time, the twelfth reference location, and the NTN assistance information of the serving cell are included in the satellite assistance information used for accessing the NTN, for example, the seventh time, the twelfth reference location, and the NTN assistance information of the serving cell are provided by a SIB 19.

The twelfth reference location meets at least one of the following:
(a) the twelfth reference location is a reference location of a second cell at an eighth time; and
(b) the twelfth reference location is the same as a thirteenth reference location, and the thirteenth reference location is the reference location of the second cell at the eighth time.

The eighth time is an epoch time of NTN assistance information of the second cell, the second cell is a cell that has a same frequency and a same PCI as the neighboring cell, and the eighth time, the thirteenth reference location, a fourteenth reference location, and the NTN assistance information of the second cell are included in the satellite assistance information used for accessing the NTN. For example, the eighth time, the thirteenth reference location, the fourteenth reference location, the PCI of the second cell, and the NTN assistance information of the second cell are provided by a SIB 19.

In an implementation of this application, after obtaining the reference location of the serving cell or the reference location of the neighboring cell, the method further includes at least one of the following:
the terminal performs measurement reporting trigger event evaluation based on the estimated reference location of the serving cell; and
the terminal performs measurement reporting trigger event evaluation based on the estimated reference location of the neighboring cell.

In an implementation of this application, in a case that the first information includes the sixth information, that the terminal obtains a reference location of a target cell based on at least one of first information and satellite assistance information used for accessing an NTN includes at least one of the following:
(1) the terminal estimates the reference location of the serving cell based on the sixth information and the satellite assistance information used for accessing the NTN; and
(2) the terminal estimates the reference location of the neighboring cell based on the sixth information and the satellite assistance information used for accessing the NTN.

In an implementation of this application, after the terminal estimates the reference location of the serving cell based on the sixth information and the satellite assistance information used for accessing the NTN or the terminal estimates the reference location of the neighboring cell based on the sixth information and the satellite assistance information used for accessing the NTN, the method further includes at least one of the following:
the terminal performs measurement reporting trigger event evaluation based on the estimated reference location of the serving cell; and
the terminal performs measurement reporting trigger event evaluation based on the estimated reference location of the neighboring cell.

In an implementation of this application, that the terminal estimates the reference location of the serving cell based on the sixth information and the satellite assistance information used for accessing the NTN includes:
in a case that a ninth condition is met, the terminal estimates the reference location of the serving cell based on the sixth information and the satellite assistance information used for accessing the NTN, where
the ninth condition includes at least one of the following:
   (1) the type of the serving cell is an earth-moving cell; and
   (2) the sixth information includes the ninth indication.

In an implementation of this application, in a case that the sixth information includes the eleventh reference location and that the satellite assistance information used for accessing the NTN includes ephemeris information of the serving cell and the seventh time, that the terminal estimates the reference location of the serving cell based on the sixth information and the satellite assistance information used for accessing the NTN includes:
the terminal estimates the reference location of the serving cell based on the eleventh reference location, the ephemeris information of the serving cell, and the seventh time.

In an implementation of this application, that the terminal estimates the reference location of the neighboring cell based on the sixth information and the satellite assistance information used for accessing the NTN includes:
in a case that a tenth condition is met, the terminal estimates the reference location of the neighboring cell based on the sixth information and the satellite assistance information used for accessing the NTN, where
the tenth condition includes at least one of the following:
   (1) the type of the neighboring cell is an earth-moving cell; and
   (2) the sixth information includes the tenth indication corresponding to the neighboring cell.

In an implementation of this application, in a case that the sixth information includes a twelfth reference location and that the satellite assistance information used for accessing the NTN includes ephemeris information of the second cell and the eighth time, that the terminal estimates the reference location of the neighboring cell based on the sixth information and the satellite assistance information used for accessing the NTN includes:
the terminal estimates a reference location of a second neighboring cell based on the twelfth reference location, the ephemeris information of the second cell, and the eighth time, where the second cell is a cell that has a same frequency and a same PCI as the second neighboring cell, and the twelfth reference location corresponds to the second neighboring cell.

In an implementation of this application, after receiving the first information, if the terminal re-obtains satellite assistance information for accessing the NTN, the method further includes at least one of the following:
(1) the terminal estimates the reference location of the serving cell based on the re-obtained satellite assistance information for accessing the NTN, where the re-obtained satellite assistance information for accessing the NTN includes at least one of the following: a reference location of the serving cell at a thirteenth time, the thirteenth time, and ephemeris information of the serving cell, where the thirteenth time is an epoch time of the NTN assistance information of the serving cell; and
(2) the terminal estimates a reference location of a third neighboring cell based on the re-obtained satellite assistance information for accessing the NTN, where the re-obtained satellite assistance information for accessing the NTN includes at least one of the following: a reference location of a sixth cell at a fourteenth time, the fourteenth time, and ephemeris information of the sixth cell, where the sixth cell is a cell that has a same frequency and a same PCI as the third neighboring cell, and the fourteenth time is an epoch time of the ephemeris information of the sixth cell.

In an implementation of this application, after receiving the first information, if the terminal re-obtains the satellite assistance information for accessing the NTN, the method further includes at least one of the following:
(1) the terminal considers (or determines) that a most recently estimated reference location of the serving cell is the reference location of the serving cell; and
(2) the terminal considers (or determines) that a most recently estimated reference location of the third neighboring cell is the reference location of the third neighboring cell.

In this embodiment, the terminal in the connected state may estimate the reference location of the target cell based on the reference location provided in the first information, and the epoch time and the ephemeris information that are provided in the satellite assistance information used for accessing the NTN. Further, if the terminal re-obtains the satellite assistance information used for accessing the NTN, the terminal estimates the reference location of the serving cell or the neighboring cell based on the epoch time and the ephemeris information that are provided in the updated satellite assistance information used for accessing the NTN, or if the terminal re-obtains the satellite assistance information used for accessing the NTN, the terminal considers that the most recently estimated reference location of the serving cell is the reference location of the serving cell or considers that the most recently estimated reference location of the third neighboring cell is the reference location of the third neighboring cell. In this way, signaling overheads can be reduced, and measurement reporting trigger event evaluation is performed based on the estimated reference location of the serving cell or the third neighboring cell.

In an implementation of this application, the first information includes seventh information, where the seventh information is used for the terminal to perform neighboring cell measurement and perform measurement reporting, and the seventh information may also be referred to as a location-based measurement reporting configuration. The seventh information includes at least one of the following:
(1) A fifteenth reference location, where the fifteenth reference location is a reference location of the serving cell, for example, referenceLocation1 in EventD1.
(2) A sixteenth reference location, where the sixteenth reference location is a reference location of one neighboring cell, for example, referenceLocation2 in EventD1.
(3) An eleventh indication, where the eleventh indication is used to indicate at least one of the following: the terminal needs to estimate the reference location of the serving cell, the terminal is enabled to estimate the reference location of the serving cell, and the terminal is requested to estimate the reference location of the serving cell.

Optionally, the seventh information may not directly carry the eleventh indication, but may implicitly indicate, by using other information in the seventh information, the foregoing content indicated by the eleventh indication. For example, in a case that the seventh information does not include the eleventh indication, if the seventh information includes a type of the serving cell, it indicates that the terminal needs to estimate the reference location of the serving cell, that is, the type of the serving cell may implicitly indicate the foregoing content indicated by the eleventh indication.

### (4) The type of the serving cell.

(5) At least one twelfth indication, where one twelfth indication corresponds to one neighboring cell, and the twelfth indication is used to indicate at least one of the following: the terminal needs to estimate a reference location of the neighboring cell, the terminal is enabled to estimate the reference location of the neighboring cell, and the terminal is requested to estimate the reference location of the neighboring cell.

Optionally, the seventh information may not directly carry the twelfth indication, but may implicitly indicate, by using other information in the seventh information, the foregoing content indicated by the twelfth indication. For example, in a case that the seventh information does not include the twelfth indication, if the seventh information includes a type of at least one neighboring cell, it indicates that the terminal needs to estimate a reference location of at least one neighboring cell, that is, the type of at least one neighboring cell may implicitly indicate the foregoing content indicated by the twelfth indication.

(6) The type of at least one neighboring cell, where the type of one neighboring cell corresponds to one neighboring cell.

### (7) Frequency information of at least one neighboring cell.

### (8) A PCI of at least one neighboring cell.

In an implementation of this application, in a case that the first information includes the seventh information, that the terminal obtains a reference location of a target cell based on at least one of first information and satellite assistance information used for accessing an NTN includes at least one of the following:
(1) the terminal estimates the reference location of the serving cell based on the satellite assistance information used for accessing the NTN; and
(2) the terminal estimates the reference location of the neighboring cell based on the satellite assistance information used for accessing the NTN.

In an implementation of this application, after the terminal estimates the reference location of the serving cell based on the satellite assistance information used for accessing the NTN or the terminal estimates the reference location of the neighboring cell based on the satellite assistance information used for accessing the NTN, the method further includes at least one of the following:
the terminal performs measurement reporting trigger event evaluation based on the estimated reference location of the serving cell; and
the terminal performs measurement reporting trigger event evaluation based on the estimated reference location of the neighboring cell.

In an implementation of this application, that the terminal estimates the reference location of the serving cell based on the satellite assistance information used for accessing the NTN includes:
in a case that an eleventh condition is met, the terminal estimates the reference location of the serving cell based on the satellite assistance information used for accessing the NTN, where
the eleventh condition includes at least one of the following:
   (1) the type of the serving cell is an earth-moving cell; and
   (2) the seventh information includes the eleventh indication.

In an implementation of this application, in a case that the seventh information includes the fifteenth reference location and that the satellite assistance information used for accessing the NTN includes a reference location of the serving cell at a fifteenth time, the fifteenth time, and ephemeris information of the serving cell, that the terminal estimates the reference location of the serving cell based on the satellite assistance information used for accessing the NTN includes:
the terminal ignores the fifteenth reference location, and the terminal estimates the reference location of the serving cell based on the reference location of the serving cell at the fifteenth time, the fifteenth time, and the ephemeris information of the serving cell, where the fifteenth time is an epoch time of NTN assistance information of the serving cell.

In an implementation of this application, that the terminal estimates the reference location of the neighboring cell based on the satellite assistance information used for accessing the NTN includes:
in a case that a twelfth condition is met, the terminal estimates the reference location of the neighboring cell based on the satellite assistance information used for accessing the NTN, where
the twelfth condition includes at least one of the following:
   (1) the type of the neighboring cell is an earth-moving cell; and
   (2) the seventh information includes the twelfth indication corresponding to the neighboring cell.

In an implementation of this application, in a case that the seventh information includes the sixteenth reference location and that the satellite assistance information used for accessing the NTN includes a reference location of a fourth cell at a twelfth time, the twelfth time, and ephemeris information of the fourth cell, that the terminal estimates the reference location of the neighboring cell based on the satellite assistance information used for accessing the NTN includes:
the terminal ignores the sixteenth reference location, and the terminal estimates a reference location of a fourth neighboring cell based on the reference location of the fourth cell at the twelfth time, the twelfth time, and the ephemeris information of the fourth cell, where the fourth cell is a cell that has a same frequency and a same PCI as the fourth neighboring cell.

In this embodiment, the terminal in the connected state may ignore the reference location provided in the first information, and the terminal in the connected state estimates the reference location of the serving cell or the neighboring cell based on the reference location, the epoch time, and the ephemeris information that are provided in the satellite assistance information used for accessing the NTN, and performs measurement reporting trigger event evaluation based on the estimated reference location of the serving cell or the fourth neighboring cell.

In this embodiment of this application, the terminal may obtain the reference location of the target cell based on at least one of the first information used for obtaining the reference location of the target cell and the satellite assistance information used for accessing the NTN, so that the terminal can autonomously obtain the reference location of the target cell in an NTN network scenario, thereby reducing signaling overheads caused by the update of the reference location of the target cell by the network.

In some embodiments of this application, the first information may include at least one of the foregoing second information, third information, fourth information, fifth information, sixth information, and seventh information. In other words, the first information may merely include any one of the second information, the third information, the fourth information, the fifth information, the sixth information, and the seventh information, or may include a combination of any part or all of the second information, the third information, the fourth information, the fifth information, the sixth information, and the seventh information.

Referring to FIG. 4, an embodiment of this application provides a communication processing method, which is performed by a network-side device. A specific step includes step 401.

Step 401: The network-side device sends at least one of first information and satellite assistance information used for accessing an NTN to a terminal, where at least one of the first information and the satellite assistance information used for accessing the NTN is used to obtain a reference location of a target cell, the first information is used to obtain the reference location of the target cell, and the target cell includes at least one of a first candidate cell, a serving cell, and a neighboring cell, where the first candidate cell is a candidate cell for conditional handover, and the neighboring cell is a neighboring cell of the serving cell.

In an implementation of this application, the terminal is in a connected state.

For descriptions about the first information and the satellite assistance information used for accessing the NTN in this embodiment, refer to the descriptions in the terminal-side embodiment. Details are not described herein again.

In this embodiment of this application, the network-side device provides the terminal with at least one of the first information used for obtaining the reference location of the target cell and the satellite assistance information used for accessing the NTN, so that the terminal can obtain the reference location of the target cell based on at least one of the first information used for obtaining the reference location of the target cell and the satellite assistance information used for accessing the NTN. In this way, the terminal can autonomously obtain the reference location of the target cell in an NTN network scenario, thereby reducing signaling overheads caused by the update of the reference location of the target cell by the network.

Referring to FIG. 5, an embodiment of this application provides a communication processing apparatus, applied to a terminal. The apparatus 500 includes:
a first obtaining module 501, configured to obtain a reference location of a target cell based on at least one of first information and satellite assistance information used for accessing an NTN, where
the first information is used to obtain the reference location of the target cell; and
the target cell includes at least one of a first candidate cell, a serving cell, and a neighboring cell, where the first candidate cell is a candidate cell for conditional handover, and the neighboring cell is a neighboring cell of the serving cell.

In an implementation of this application, the satellite assistance information used for accessing the NTN is carried by system information. For example, the system information may be a SIB 19. The first information is carried by dedicated signaling. For example, the dedicated signaling may be RRC reconfiguration (RRC Reconfiguration) signaling.

In an implementation of this application, the terminal is in a connected state.

In an implementation of this application, the first information includes second information, and the second information includes at least one of the following:
(1) a first reference location, where the first reference location is a reference location of the serving cell at a first time;
(2) the first time;
(3) ephemeris information of the serving cell;
(4) a second reference location, where the second reference location is a reference location of the first candidate cell at a second time;
(5) the second time;
(6) ephemeris information of the first candidate cell;
(7) a first indication, where the first indication is used to indicate at least one of the following: the terminal needs to estimate the reference location of the serving cell, the terminal is enabled to estimate the reference location of the serving cell, and the terminal is requested to estimate the reference location of the serving cell;
(8) a type of the serving cell;
(9) a second indication, where the second indication is used to indicate at least one of the following: the terminal needs to estimate the reference location of the first candidate cell, the terminal is enabled to estimate the reference location of the first candidate cell, and the terminal is requested to estimate the reference location of the first candidate cell; and
(10) a type of the first candidate cell.

In an implementation of this application, the first information includes third information, and the third information includes at least one of the following:
(1) a third reference location;
(2) a fourth reference location;
(3) a third indication, where the third indication is used to indicate at least one of the following: the terminal needs to estimate a reference location of the serving cell, the terminal is enabled to estimate the reference location of the serving cell, and the terminal is requested to estimate the reference location of the serving cell;
(4) a type of the serving cell;
(5) a fourth indication, where the fourth indication is used to indicate at least one of the following: the terminal needs to estimate a reference location of the first candidate cell, the terminal is enabled to estimate the reference location of the first candidate cell, and the terminal is requested to estimate the reference location of the first candidate cell; and
(6) a type of the first candidate cell, where
   the third reference location meets at least one of the following:
   the third reference location is the reference location of the serving cell at a third time; and
   the third reference location is the same as a fifth reference location, and the fifth reference location is the reference location of the serving cell at the third time, where
   the third time is an epoch time of NTN assistance information of the serving cell, and the third time, the fifth reference location, and the NTN assistance information of the serving cell are included in the satellite assistance information used for accessing the NTN; and
   the fourth reference location meets at least one of the following:
      the fourth reference location is the reference location of the first candidate cell at a fourth time; and
      the fourth reference location is the same as a sixth reference location, and the sixth reference location is a reference location of a first cell at the fourth time, where
      the fourth time is an epoch time of NTN assistance information of the first cell, the first cell is a cell that has a same frequency and a same PCI as the first candidate cell, and the sixth reference location, the fourth time, and the NTN assistance information of the first cell are included in the satellite assistance information used for accessing the NTN.

In an implementation of this application, the first information includes fourth information, and the fourth information includes at least one of the following:
(1) a seventh reference location, where the seventh reference location is a reference location of the serving cell;
(2) an eighth reference location, where the eighth reference location is a reference location of the first candidate cell;
(3) a fifth indication, where the fifth indication is used to indicate at least one of the following: the terminal needs to estimate the reference location of the serving cell, the terminal is enabled to estimate the reference location of the serving cell, and the terminal is requested to estimate the reference location of the serving cell;
(4) a type of the serving cell;
(5) a sixth indication, where the sixth indication is used to indicate at least one of the following: the terminal needs to estimate the reference location of the first candidate cell, the terminal is enabled to estimate the reference location of the first candidate cell, and the terminal is requested to estimate the reference location of the first candidate cell; and
(6) a type of the first candidate cell.

In an implementation of this application, the first information includes fifth information, and the fifth information includes at least one of the following:
(1) a ninth reference location, where the ninth reference location is a reference location of the serving cell at a fifth time;
(2) the fifth time;
(3) ephemeris information of the serving cell;
(4) at least one tenth reference location, where the tenth reference location is a reference location of one neighboring cell at a sixth time;
(5) at least one sixth time, where one sixth time corresponds to one tenth reference location;
(6) ephemeris information of at least one neighboring cell, where ephemeris information of one neighboring cell corresponds to one tenth reference location;
(7) a seventh indication, where the seventh indication is used to indicate at least one of the following: the terminal needs to estimate the reference location of the serving cell, the terminal is enabled to estimate the reference location of the serving cell, and the terminal is requested to estimate the reference location of the serving cell;
(8) a type of the serving cell;
(9) a type of at least one neighboring cell, where the type of one neighboring cell corresponds to one neighboring cell;
(10) at least one eighth indication, where one eighth indication corresponds to one neighboring cell, and the eighth indication is used to indicate at least one of the following: the terminal needs to estimate a reference location of the neighboring cell, the terminal is enabled to estimate the reference location of the neighboring cell, and the terminal is requested to estimate the reference location of the neighboring cell;
(11) frequency information of at least one neighboring cell; and
(12) a PCI of at least one neighboring cell.

In an implementation of this application, the first information includes sixth information, and the sixth information includes at least one of the following:
(1) an eleventh reference location;
(2) at least one twelfth reference location;
(3) frequency information of at least one neighboring cell;
(4) a PCI of at least one neighboring cell, where the PCI of one neighboring cell corresponds to one neighboring cell;
(5) a ninth indication, where the ninth indication is used to indicate at least one of the following: the terminal needs to estimate a reference location of the serving cell, the terminal is enabled to estimate the reference location of the serving cell, and the terminal is requested to estimate the reference location of the serving cell;
(6) a type of the serving cell;
(7) at least one tenth indication, where one tenth indication corresponds to one neighboring cell, and the tenth indication is used to indicate at least one of the following: the terminal needs to estimate a reference location of the neighboring cell, the terminal is enabled to estimate the reference location of the neighboring cell, and the terminal is requested to estimate the reference location of the neighboring cell; and
(8) a type of at least one neighboring cell, where the type of one neighboring cell corresponds to one neighboring cell, where
the eleventh reference location meets at least one of the following:
(1) the eleventh reference location is the reference location of the serving cell at a seventh time; and
(2) the eleventh reference location is the same as a thirteenth reference location, and the thirteenth reference location is the reference location of the serving cell at the seventh time, where
the seventh time is an epoch time of NTN assistance information of the serving cell, and the seventh time, the twelfth reference location, and the NTN assistance information of the serving cell are included in the satellite assistance information used for accessing the NTN; and
the twelfth reference location meets at least one of the following:
   (1) the twelfth reference location is a reference location of a second cell at an eighth time; and
   (2) the twelfth reference location is the same as a thirteenth reference location, and the thirteenth reference location is the reference location of the second cell at the eighth time, where
the eighth time is an epoch time of NTN assistance information of the second cell, the second cell is a cell that has a same frequency and a same PCI as the neighboring cell, and the eighth time, the thirteenth reference location, a fourteenth reference location, and the NTN assistance information of the second cell are included in the satellite assistance information used for accessing the NTN.

In an implementation of this application, the first information includes seventh information, and the seventh information includes at least one of the following:
(1) a fifteenth reference location, where the fifteenth reference location is a reference location of the serving cell;
(2) a sixteenth reference location, where the sixteenth reference location is a reference location of one neighboring cell;
(3) an eleventh indication, where the eleventh indication is used to indicate at least one of the following: the terminal needs to estimate the reference location of the serving cell, the terminal is enabled to estimate the reference location of the serving cell, and the terminal is requested to estimate the reference location of the serving cell;
(4) a type of the serving cell;
(5) at least one twelfth indication, where one twelfth indication corresponds to one neighboring cell, and the twelfth indication is used to indicate at least one of the following: the terminal needs to estimate a reference location of the neighboring cell, the terminal is enabled to estimate the reference location of the neighboring cell, and the terminal is requested to estimate the reference location of the neighboring cell;
(6) a type of at least one neighboring cell, where the type of one neighboring cell corresponds to one neighboring cell;
(7) frequency information of at least one neighboring cell; and
(8) a PCI of at least one neighboring cell.

In an implementation of this application, the first obtaining module is further configured to perform at least one of the following:
estimating the reference location of the serving cell based on the second information; and
estimating the reference location of the first candidate cell based on the second information.

In an implementation of this application, the estimating the reference location of the serving cell based on the second information includes:
in a case that a first condition is met, estimating the reference location of the serving cell based on the second information, where
the first condition includes at least one of the following:
   the type of the serving cell is an earth-moving cell; and
   the second information includes the first indication.

In an implementation of this application, in a case that the second information includes the first reference location, the first time, and the ephemeris information of the serving cell, the estimating the reference location of the serving cell based on the second information includes:
estimating the reference location of the serving cell based on the first reference location, the first time, and the ephemeris information of the serving cell.

In an implementation of this application, the estimating the reference location of the first candidate cell based on the second information includes:
in a case that a second condition is met, estimating, by the terminal, the reference location of the first candidate cell based on the second information, where
the second condition includes at least one of the following:
   the type of the first candidate cell is an earth-moving cell; and
   the second information includes the second indication.

In an implementation of this application, in a case that the second information includes the second reference location, the second time, and the ephemeris information of the first candidate cell, the estimating the reference location of the first candidate cell based on the second information includes:
estimating the reference location of the first candidate cell based on the second reference location, the second time, and the ephemeris information of the first candidate cell.

In an implementation of this application, the first obtaining module is further configured to perform at least one of the following:
estimating the reference location of the serving cell based on the third information and the satellite assistance information used for accessing the NTN; and
estimating the reference location of the first candidate cell based on the third information and the satellite assistance information used for accessing the NTN.

In an implementation of this application, the estimating the reference location of the serving cell based on the third information and the satellite assistance information used for accessing the NTN includes:
in a case that a third condition is met, estimating the reference location of the serving cell based on the third information and the satellite assistance information used for accessing the NTN, where
the third condition includes at least one of the following:
   the type of the serving cell is an earth-moving cell; and
   the third information includes the third indication.

In an implementation of this application, in a case that the third information includes the third reference location and that the satellite assistance information used for accessing the NTN includes ephemeris information of the serving cell and the third time, the estimating the reference location of the serving cell based on the third information and the satellite assistance information used for accessing the NTN includes:
estimating the reference location of the serving cell based on the third reference location, the ephemeris information of the serving cell, and the third time.

In an implementation of this application, the estimating the reference location of the first candidate cell based on the third information and the satellite assistance information used for accessing the NTN includes:
in a case that a fourth condition is met, estimating the reference location of the first candidate cell based on the third information and the satellite assistance information used for accessing the NTN, where
the fourth condition includes at least one of the following:
   the type of the first candidate cell is an earth-moving cell; and
   the third information includes the fourth indication.

In an implementation of this application, in a case that the third information includes the fourth reference location and that the satellite assistance information used for accessing the NTN includes ephemeris information of the first cell and the fourth time, the estimating the reference location of the first candidate cell based on the third information and the satellite assistance information used for accessing the NTN includes:
estimating the reference location of the first candidate cell based on the fourth reference location, the ephemeris information of the first cell, and the fourth time.

In an implementation of this application, the apparatus further includes a second obtaining module, where the second obtaining module is configured to perform at least one of the following:
estimating the reference location of the serving cell based on the re-obtained satellite assistance information used for accessing the NTN, where the re-obtained satellite assistance information used for accessing the NTN includes at least one of the following: a reference location of the serving cell at an eleventh time, the eleventh time, and ephemeris information of the serving cell, where the eleventh time is an epoch time of the NTN assistance information of the serving cell; and
estimating the reference location of the first candidate cell based on the re-obtained satellite assistance information for accessing the NTN, where the re-obtained satellite assistance information for accessing the NTN includes at least one of the following: a reference location of a fifth cell at a twelfth time, the twelfth time, and ephemeris information of the fifth cell, where the fifth cell is a cell that has a same frequency and a same PCI as the first candidate cell, and the twelfth time is an epoch time of the ephemeris information of the fifth cell.

In an implementation of this application, the first obtaining module is further configured to perform at least one of the following:
ignoring at least part of the fourth information, and estimating, by the terminal, the reference location of the serving cell based on the satellite assistance information used for accessing the NTN; and
ignoring at least part of the fourth information, and estimating, by the terminal, the reference location of the first candidate cell based on the satellite assistance information used for accessing the NTN.

In an implementation of this application, the ignoring at least part of the fourth information, and estimating the reference location of the serving cell based on the satellite assistance information used for accessing the NTN includes:
in a case that a fifth condition is met, ignoring at least part of the fourth information, and estimating the reference location of the serving cell based on the satellite assistance information used for accessing the NTN, where
the fifth condition includes at least one of the following:
   the type of the serving cell is an earth-moving cell; and
   the fourth information includes the fifth indication.

In an implementation of this application, in a case that the fourth information includes the seventh reference location and that the satellite assistance information used for accessing the NTN includes a reference location of the serving cell at a ninth time, the ninth time, and ephemeris information of the serving cell, the ignoring the seventh reference location, and estimating the reference location of the serving cell based on the satellite assistance information used for accessing the NTN includes:
ignoring the seventh reference location, and estimating the reference location of the serving cell based on the reference location of the serving cell at the ninth time, the ninth time, and the ephemeris information of the serving cell, where the ninth time is an epoch time of NTN assistance information of the serving cell.

In an implementation of this application, the ignoring at least part of the fourth information, and estimating the reference location of the first candidate cell based on the satellite assistance information used for accessing the NTN includes:
in a case that a sixth condition is met, ignoring at least part of the fourth information, and estimating the reference location of the first candidate cell based on the satellite assistance information used for accessing the NTN, where
the sixth condition includes at least one of the following:
   the type of the first candidate cell is an earth-moving cell; and
   the fourth information includes the sixth indication.

In an implementation of this application, in a case that the fourth information includes the eighth reference location and that the satellite assistance information used for accessing the NTN includes a reference location of a third cell at a tenth time, the tenth time, and ephemeris information of the third cell, the ignoring the eighth reference location, and estimating the reference location of the first candidate cell based on the satellite assistance information used for accessing the NTN includes:
ignoring the eighth reference location, and estimating the reference location of the first candidate cell based on the reference location of the third cell at the tenth time, the tenth time, and the ephemeris information of the third cell, where the third cell is a cell that has a same frequency and a same PCI as the first candidate cell, and the tenth time is an epoch time of NTN assistance information of the serving cell.

In an implementation of this application, the apparatus further includes a first processing module, configured to perform at least one of the following:
considering that a most recently estimated reference location of the serving cell is the reference location of the serving cell; and
considering that a most recently estimated reference location of the first candidate cell is the reference location of the first candidate cell.

In an implementation of this application, the apparatus further includes:
a first execution module, configured to: after the reference location of the serving cell is obtained, perform CHO trigger event evaluation based on the estimated reference location of the serving cell, or after the reference location of the first candidate cell is obtained, perform CHO trigger event evaluation based on the estimated reference location of the first candidate cell.

In an implementation of this application, the first obtaining module is further configured to perform at least one of the following:
estimating the reference location of the serving cell based on the fifth information; and
estimating the reference location of the neighboring cell based on the fifth information.

In an implementation of this application, the estimating the reference location of the serving cell based on the fifth information includes:
in a case that a seventh condition is met, estimating, by the terminal, the reference location of the serving cell based on the fifth information, where
the seventh condition includes at least one of the following:
   the type of the serving cell is an earth-moving cell; and
   the fifth information includes the seventh indication.

In an implementation of this application, in a case that the fifth information includes the ninth reference location, the fifth time, and the ephemeris information of the serving cell, the estimating the reference location of the serving cell based on the fifth information includes:
estimating the reference location of the serving cell based on the ninth reference location, the fifth time, and the ephemeris information of the serving cell.

In an implementation of this application, the estimating the reference location of the neighboring cell based on the fifth information includes:
in a case that an eighth condition is met, estimating the reference location of the neighboring cell based on the fifth information, where
the eighth condition includes at least one of the following:
   the type of the neighboring cell is an earth-moving cell; and
   the fifth information includes the eighth indication corresponding to the neighboring cell.

In an implementation of this application, in a case that the fifth information includes the at least one tenth reference location, the at least one sixth time, and the ephemeris information of the at least one neighboring cell, the estimating the reference location of the neighboring cell based on the fifth information includes:
estimating a reference location of a first neighboring cell based on one tenth reference location, one sixth time, and ephemeris information of one neighboring cell, where the first neighboring cell is a neighboring cell corresponding to the sixth time, the tenth reference location, and the ephemeris information of the neighboring cell.

In an implementation of this application, the first obtaining module is further configured to perform at least one of the following:
estimating the reference location of the serving cell based on the sixth information and the satellite assistance information used for accessing the NTN; and
estimating the reference location of the neighboring cell based on the sixth information and the satellite assistance information used for accessing the NTN.

In an implementation of this application, the estimating the reference location of the serving cell based on the sixth information and the satellite assistance information used for accessing the NTN includes:
in a case that a ninth condition is met, estimating the reference location of the serving cell based on the sixth information and the satellite assistance information used for accessing the NTN, where
the ninth condition includes at least one of the following:
   the type of the serving cell is an earth-moving cell; and
   the sixth information includes the ninth indication.

In an implementation of this application, in a case that the sixth information includes the eleventh reference location and that the satellite assistance information used for accessing the NTN includes ephemeris information of the serving cell and the seventh time, the estimating the reference location of the serving cell based on the sixth information and the satellite assistance information used for accessing the NTN includes:
estimating the reference location of the serving cell based on the eleventh reference location, the ephemeris information of the serving cell, and the seventh time.

In an implementation of this application, the estimating the reference location of the neighboring cell based on the sixth information and the satellite assistance information used for accessing the NTN includes:
in a case that a tenth condition is met, estimating the reference location of the neighboring cell based on the sixth information and the satellite assistance information used for accessing the NTN, where
the tenth condition includes at least one of the following:
   the type of the neighboring cell is an earth-moving cell; and
   the sixth information includes the tenth indication corresponding to the neighboring cell.

In an implementation of this application, in a case that the sixth information includes a twelfth reference location and that the satellite assistance information used for accessing the NTN includes ephemeris information of the second cell and the eighth time, the estimating the reference location of the neighboring cell based on the sixth information and the satellite assistance information used for accessing the NTN includes:
estimating a reference location of a second neighboring cell based on the twelfth reference location, the ephemeris information of the second cell, and the eighth time, where the second cell is a cell that has a same frequency and a same PCI as the second neighboring cell, and the twelfth reference location corresponds to the second neighboring cell.

In an implementation of this application, the apparatus further includes a third obtaining module, where the third obtaining module is configured to perform at least one of the following:
estimating the reference location of the serving cell based on the re-obtained satellite assistance information for accessing the NTN, where the re-obtained satellite assistance information for accessing the NTN includes at least one of the following: a reference location of the serving cell at a thirteenth time, the thirteenth time, and ephemeris information of the serving cell, where the thirteenth time is an epoch time of the NTN assistance information of the serving cell; and
estimating a reference location of a third neighboring cell based on the re-obtained satellite assistance information for accessing the NTN, where the re-obtained satellite assistance information for accessing the NTN includes at least one of the following: a reference location of a sixth cell at a fourteenth time, the fourteenth time, and ephemeris information of the sixth cell, where the sixth cell is a cell that has a same frequency and a same PCI as the third neighboring cell, and the fourteenth time is an epoch time of the ephemeris information of the sixth cell.

In an implementation of this application, the first obtaining module is further configured to perform at least one of the following:
estimating the reference location of the serving cell based on the satellite assistance information used for accessing the NTN; and
estimating the reference location of the neighboring cell based on the satellite assistance information used for accessing the NTN.

In an implementation of this application, the estimating the reference location of the serving cell based on the satellite assistance information used for accessing the NTN includes:
in a case that an eleventh condition is met, estimating the reference location of the serving cell based on the satellite assistance information used for accessing the NTN, where
the eleventh condition includes at least one of the following:
   the type of the serving cell is an earth-moving cell; and
   the seventh information includes the eleventh indication.

In an implementation of this application, in a case that the seventh information includes the fifteenth reference location and that the satellite assistance information used for accessing the NTN includes a reference location of the serving cell at a fifteenth time, the fifteenth time, and ephemeris information of the serving cell, the estimating the reference location of the serving cell based on the satellite assistance information used for accessing the NTN includes:
ignoring the fifteenth reference location, and estimating the reference location of the serving cell based on the reference location of the serving cell at the fifteenth time, the fifteenth time, and the ephemeris information of the serving cell, where the fifteenth time is an epoch time of NTN assistance information of the serving cell.

In an implementation of this application, the estimating the reference location of the neighboring cell based on the satellite assistance information used for accessing the NTN includes:
in a case that a twelfth condition is met, estimating the reference location of the neighboring cell based on the satellite assistance information used for accessing the NTN, where
the twelfth condition includes at least one of the following:
   the type of the neighboring cell is an earth-moving cell; and
   the seventh information includes the twelfth indication corresponding to the neighboring cell.

In an implementation of this application, in a case that the seventh information includes the sixteenth reference location and that the satellite assistance information used for accessing the NTN includes a reference location of a fourth cell at a twelfth time, the twelfth time, and ephemeris information of the fourth cell, the estimating the reference location of the neighboring cell based on the satellite assistance information used for accessing the NTN includes:
ignoring the sixteenth reference location, and estimating a reference location of a fourth neighboring cell based on the reference location of the fourth cell at the twelfth time, the twelfth time, and the ephemeris information of the fourth cell, where the fourth cell is a cell that has a same frequency and a same PCI as the fourth neighboring cell.

In an implementation of this application, the apparatus further includes a second processing module, configured to perform at least one of the following:
considering that a most recently estimated reference location of the serving cell is the reference location of the serving cell; and
considering that a most recently estimated reference location of the third neighboring cell is the reference location of the third neighboring cell.

In an implementation of this application, the apparatus further includes:
a second execution module, configured to perform at least one of the following: performing measurement reporting trigger event evaluation based on the estimated reference location of the serving cell; and performing measurement reporting trigger event evaluation based on the estimated reference location of the neighboring cell or the first neighboring cell or the second neighboring cell or the third neighboring cell or the fourth neighboring cell.

The apparatus provided in this embodiment of this application can implement each process implemented in the method embodiment in FIG. 3, with the same technical effect achieved. To avoid repetition, details are not described herein again.

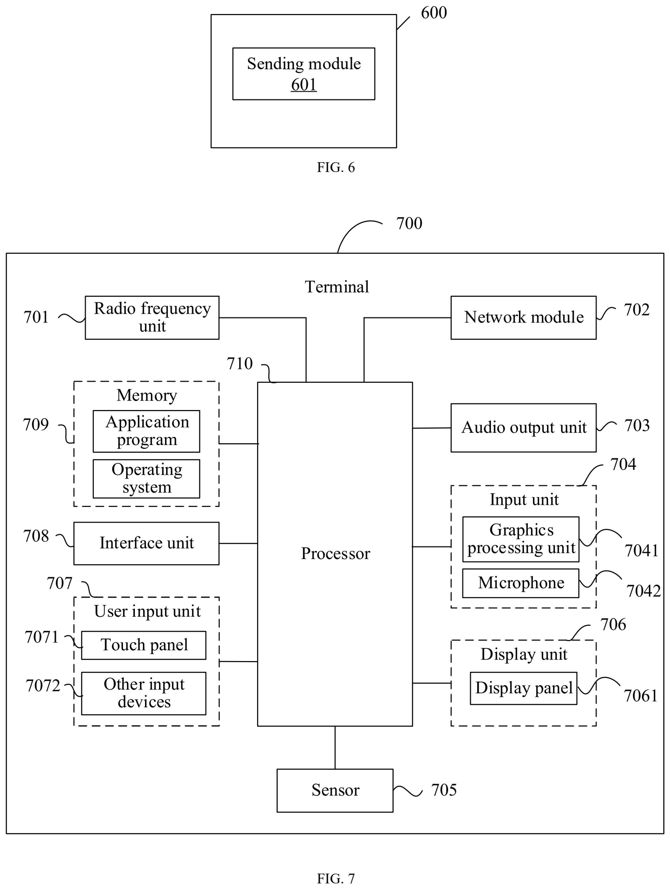

Referring to FIG. 6, an embodiment of this application provides a communication processing apparatus, applied to a network-side device. The apparatus 600 includes:
a sending module 601, configured to send at least one of first information and satellite assistance information used for accessing an NTN to a terminal, where at least one of the first information and the satellite assistance information used for accessing the NTN is used to obtain a reference location of a target cell, the first information is used to obtain the reference location of the target cell, and the target cell includes at least one of a first candidate cell, a serving cell, and a neighboring cell, where the first candidate cell is a candidate cell for conditional handover, and the neighboring cell is a neighboring cell of the serving cell.

Optionally, the terminal is in a connected state.

In an implementation of this application, the satellite assistance information used for accessing the NTN is carried by system information; and the first information is carried by dedicated signaling.

In an implementation of this application, the first information includes second information, and the second information includes at least one of the following:
a first reference location, where the first reference location is a reference location of the serving cell at a first time;
the first time;
ephemeris information of the serving cell;
a second reference location, where the second reference location is a reference location of the first candidate cell at a second time;
the second time;
ephemeris information of the first candidate cell;
a first indication, where the first indication is used to indicate at least one of the following: the terminal needs to estimate the reference location of the serving cell, the terminal is enabled to estimate the reference location of the serving cell, and the terminal is requested to estimate the reference location of the serving cell;
a type of the serving cell;
a second indication, where the second indication is used to indicate at least one of the following: the terminal needs to estimate the reference location of the first candidate cell, the terminal is enabled to estimate the reference location of the first candidate cell, and the terminal is requested to estimate the reference location of the first candidate cell; and
a type of the first candidate cell.

In an implementation of this application, the first information includes third information, and
the third information includes at least one of the following:
a third reference location;
a fourth reference location;
a third indication, where the third indication is used to indicate at least one of the following: the terminal needs to estimate a reference location of the serving cell, the terminal is enabled to estimate the reference location of the serving cell, and the terminal is requested to estimate the reference location of the serving cell;
a type of the serving cell;
a fourth indication, where the fourth indication is used to indicate at least one of the following: the terminal needs to estimate a reference location of the first candidate cell, the terminal is enabled to estimate the reference location of the first candidate cell, and the terminal is requested to estimate the reference location of the first candidate cell; and
a type of the first candidate cell, where
the third reference location meets at least one of the following:
   the third reference location is the reference location of the serving cell at a third time; and
   the third reference location is the same as a fifth reference location, and the fifth reference location is the reference location of the serving cell at the third time, where
   the third time is an epoch time of NTN assistance information of the serving cell, and the third time, the fifth reference location, and the NTN assistance information of the serving cell are included in the satellite assistance information used for accessing the NTN; and
   the fourth reference location meets at least one of the following:
      the fourth reference location is the reference location of the first candidate cell at a fourth time; and
      the fourth reference location is the same as a sixth reference location, and the sixth reference location is a reference location of a first cell at the fourth time, where
      the fourth time is an epoch time of NTN assistance information of the first cell, the first cell is a cell that has a same frequency and a same physical cell identifier PCI as the first candidate cell, and the sixth reference location, the fourth time, and the NTN assistance information of the first cell are included in the satellite assistance information used for accessing the NTN.

In an implementation of this application, the first information includes fourth information, and
the fourth information includes at least one of the following:
a seventh reference location, where the seventh reference location is a reference location of the serving cell;
an eighth reference location, where the eighth reference location is a reference location of the first candidate cell;
a fifth indication, where the fifth indication is used to indicate at least one of the following: the terminal needs to estimate the reference location of the serving cell, the terminal is enabled to estimate the reference location of the serving cell, and the terminal is requested to estimate the reference location of the serving cell;
a type of the serving cell;
a sixth indication, where the sixth indication is used to indicate at least one of the following: the terminal needs to estimate the reference location of the first candidate cell, the terminal is enabled to estimate the reference location of the first candidate cell, and the terminal is requested to estimate the reference location of the first candidate cell; and
a type of the first candidate cell.

In an implementation of this application, the first information includes fifth information, and the fifth information includes at least one of the following:
a ninth reference location, where the ninth reference location is a reference location of the serving cell at a fifth time;
the fifth time;
ephemeris information of the serving cell;
at least one tenth reference location, where the tenth reference location is a reference location of one neighboring cell at a sixth time;
at least one sixth time, where one sixth time corresponds to one tenth reference location;
ephemeris information of at least one neighboring cell, where ephemeris information of one neighboring cell corresponds to one tenth reference location;
a seventh indication, where the seventh indication is used to indicate at least one of the following: the terminal needs to estimate the reference location of the serving cell, the terminal is enabled to estimate the reference location of the serving cell, and the terminal is requested to estimate the reference location of the serving cell;
a type of the serving cell;
a type of at least one neighboring cell, where the type of one neighboring cell corresponds to one neighboring cell;
at least one eighth indication, where one eighth indication corresponds to one neighboring cell, and the eighth indication is used to indicate at least one of the following: the terminal needs to estimate a reference location of the neighboring cell, the terminal is enabled to estimate the reference location of the neighboring cell, and the terminal is requested to estimate the reference location of the neighboring cell;
frequency information of at least one neighboring cell; and
a PCI of at least one neighboring cell.

In an implementation of this application, the first information includes sixth information, and the sixth information includes at least one of the following:
an eleventh reference location;
at least one twelfth reference location;
frequency information of at least one neighboring cell;
a PCI of at least one neighboring cell;
a ninth indication, where the ninth indication is used to indicate at least one of the following: the terminal needs to estimate a reference location of the serving cell, the terminal is enabled to estimate the reference location of the serving cell, and the terminal is requested to estimate the reference location of the serving cell;
a type of the serving cell;
at least one tenth indication, where one tenth indication corresponds to one neighboring cell, and the tenth indication is used to indicate at least one of the following: the terminal needs to estimate a reference location of the neighboring cell, the terminal is enabled to estimate the reference location of the neighboring cell, and the terminal is requested to estimate the reference location of the neighboring cell; and
a type of at least one neighboring cell, where the type of one neighboring cell corresponds to one neighboring cell, where
the eleventh reference location meets at least one of the following:
   the eleventh reference location is the reference location of the serving cell at a seventh time; and
   the eleventh reference location is the same as a thirteenth reference location, and the thirteenth reference location is the reference location of the serving cell at the seventh time, where
   the seventh time is an epoch time of NTN assistance information of the serving cell, and the seventh time, the twelfth reference location, and the NTN assistance information of the serving cell are included in the satellite assistance information used for accessing the NTN; and
   the twelfth reference location meets at least one of the following:
      the twelfth reference location is a reference location of a second cell at an eighth time; and
      the twelfth reference location is the same as a thirteenth reference location, and the thirteenth reference location is the reference location of the second cell at the eighth time, where
      the eighth time is an epoch time of NTN assistance information of the second cell, the second cell is a cell that has a same frequency and a same PCI as the neighboring cell, and the eighth time, the thirteenth reference location, a fourteenth reference location, and the NTN assistance information of the second cell are included in the satellite assistance information used for accessing the NTN.

In an implementation of this application, the first information includes seventh information, and the seventh information includes at least one of the following:
a fifteenth reference location, where the fifteenth reference location is a reference location of the serving cell;
a sixteenth reference location, where the sixteenth reference location is a reference location of one neighboring cell;
an eleventh indication, where the eleventh indication is used to indicate at least one of the following: the terminal needs to estimate the reference location of the serving cell, the terminal is enabled to estimate the reference location of the serving cell, and the terminal is requested to estimate the reference location of the serving cell;
a type of the serving cell;
at least one twelfth indication, where one twelfth indication corresponds to one neighboring cell, and the twelfth indication is used to indicate at least one of the following: the terminal needs to estimate a reference location of the neighboring cell, the terminal is enabled to estimate the reference location of the neighboring cell, and the terminal is requested to estimate the reference location of the neighboring cell;
a type of at least one neighboring cell, where the type of one neighboring cell corresponds to one neighboring cell;
frequency information of at least one neighboring cell; and
a PCI of at least one neighboring cell.

The apparatus provided in this embodiment of this application can implement each process implemented in the method embodiment in FIG. 4, with the same technical effect achieved. To avoid repetition, details are not described herein again.

FIG. 7 is a schematic diagram of a hardware structure of a terminal for implementing an embodiment of this application. The terminal 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. The power supply may be logically connected to the processor 710 through a power management system. In this way, functions such as charge management, discharge management, and power consumption management are implemented by using the power management system. The terminal structure shown in FIG. 7 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory, or the memory 709 may include a non-transitory memory. The non-volatile memory or non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 710.

The terminal provided in this embodiment of this application can implement each process implemented in the method embodiment in FIG. 3, with the same technical effect achieved. To avoid repetition, details are not described herein again.

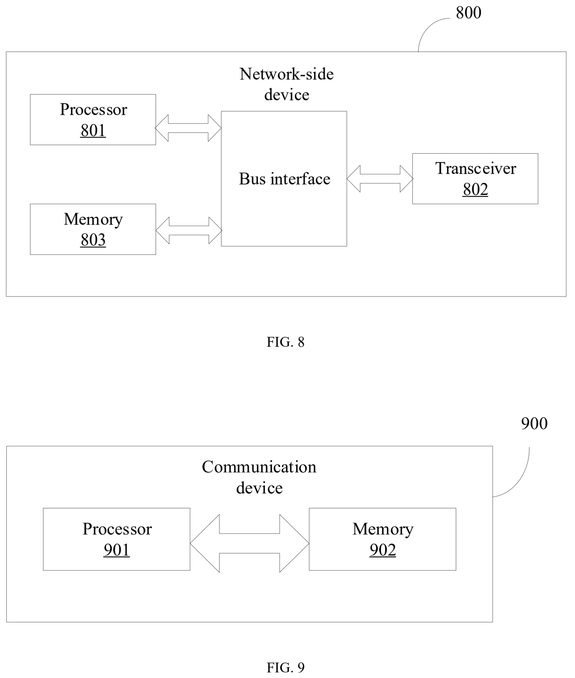

Refer to FIG. 8. FIG. 8 is a structural diagram of a network-side device to which an embodiment of this application is applied. As shown in FIG. 8, the network-side device 800 includes a processor 801, a transceiver 802, a memory 803, and a bus interface. The processor 801 may be responsible for bus architecture management and general processing. The memory 803 may store data that the processor 801 uses when performing an operation.

In an embodiment of this application, the network device-side 800 further includes a program stored in the memory 803 and capable of running on the processor 801. When the program is executed by the processor 801, the steps in the foregoing method shown in FIG. 4 are implemented.

In FIG. 8, a bus architecture may include any quantity of interconnected buses and bridges, and specifically connects together various circuits of one or more processors represented by the processor 801 and a memory represented by the memory 803. The bus architecture may further interconnect various other circuits such as a peripheral device, a voltage regulator, and a power management circuit. These are all well known in the art, and therefore are not further described in this specification. The bus interface provides an interface. The transceiver 802 may be a plurality of components, including a transmitter and a receiver, and providing units for communicating with a variety of other apparatuses over a transmission medium.

The network-side device provided in this embodiment of this application can implement each process implemented in the foregoing method embodiment in FIG. 4, with the same technical effect achieved. To avoid repetition, details are not described herein again.

As shown in FIG. 9, an embodiment of this application further provides a communication device 900, including a processor 901 and a memory 902. The memory 902 stores a program or instructions capable of running on the processor 901. For example, when the communication device 900 is a terminal, and the program or instructions are executed by the processor 901, the steps of the foregoing method embodiment in FIG. 3 are implemented; or when the communication device 900 is a network-side device, and the program or instructions are executed by the processor 901, the steps of the foregoing method embodiment in FIG. 4 are implemented, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment in FIG. 3 or FIG. 4 is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

In addition, an embodiment of this application provides a chip. The chip includes a processor and a communication interface. The communication interface is coupled to the processor. The processor is configured to run a program or instructions to implement each process of the foregoing method embodiment in FIG. 3 or FIG. 4, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing method embodiment in FIG. 3 or FIG. 4, with the same technical effect achieved. To avoid repetition, details are not described herein again.

An embodiment of this application further provides a communication system. The communication system includes a terminal and a network-side device. The terminal is configured to perform each process of the foregoing method embodiment in FIG. 3, and the network-side device is configured to perform each process of the foregoing method embodiment in FIG. 4, with the same technical effect achieved. To avoid repetition, details are not described herein again.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to the process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in the order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

Based on the foregoing descriptions of the implementations, a person skilled in the art may clearly understand that the foregoing embodiment methods can be implemented by using a computer software product in combination with a necessary general hardware platform, or by using hardware only. The computer software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners of embodiments without departing from principles of this application and the protection scope of the claims, and all such manners of embodiments fall within the protection scope of this application.

## Claims

1. A communication processing method, comprising:
obtaining, by a terminal, a reference location of a target cell based on at least one of first information and satellite assistance information used for accessing a non-terrestrial network NTN, wherein
the first information is used to obtain the reference location of the target cell; and
the target cell comprises at least one of a first candidate cell, a serving cell, and a neighboring cell, wherein the first candidate cell is a candidate cell for conditional handover, and the neighboring cell is a neighboring cell of the serving cell.

2. The method according to claim 1, wherein the satellite assistance information used for accessing the NTN is carried by system information; and the first information is carried by dedicated signaling.

3. The method according to claim 1 or 2, wherein the first information comprises second information, and the second information comprises at least one of the following:
a first reference location, wherein the first reference location is a reference location of the serving cell at a first time;
the first time;
ephemeris information of the serving cell;
a second reference location, wherein the second reference location is a reference location of the first candidate cell at a second time;
the second time;
ephemeris information of the first candidate cell;
a first indication, wherein the first indication is used to indicate at least one of the following: the terminal needs to estimate the reference location of the serving cell, the terminal is enabled to estimate the reference location of the serving cell, and the terminal is requested to estimate the reference location of the serving cell;
a type of the serving cell;
a second indication, wherein the second indication is used to indicate at least one of the following: the terminal needs to estimate the reference location of the first candidate cell, the terminal is enabled to estimate the reference location of the first candidate cell, and the terminal is requested to estimate the reference location of the first candidate cell; and
a type of the first candidate cell.

4. The method according to claim 1 or 2, wherein the first information comprises third information, and
the third information comprises at least one of the following:
a third reference location;
a fourth reference location;
a third indication, wherein the third indication is used to indicate at least one of the following: the terminal needs to estimate a reference location of the serving cell, the terminal is enabled to estimate the reference location of the serving cell, and the terminal is requested to estimate the reference location of the serving cell;
a type of the serving cell;
a fourth indication, wherein the fourth indication is used to indicate at least one of the following:
the terminal needs to estimate a reference location of the first candidate cell, the terminal is enabled to estimate the reference location of the first candidate cell, and the terminal is requested to estimate the reference location of the first candidate cell; and
a type of the first candidate cell, wherein
the third reference location meets at least one of the following:
the third reference location is the reference location of the serving cell at a third time; and
the third reference location is the same as a fifth reference location, and the fifth reference location is the reference location of the serving cell at the third time, wherein
the third time is an epoch time of NTN assistance information of the serving cell, and the third time, the fifth reference location, and the NTN assistance information of the serving cell are comprised in the satellite assistance information used for accessing the NTN; and
the fourth reference location meets at least one of the following:
the fourth reference location is the reference location of the first candidate cell at a fourth time; and
the fourth reference location is the same as a sixth reference location, and the sixth reference location is a reference location of a first cell at the fourth time, wherein
the fourth time is an epoch time of NTN assistance information of the first cell, the first cell is a cell that has a same frequency and a same physical cell identifier PCI as the first candidate cell, and the sixth reference location, the fourth time, and the NTN assistance information of the first cell are comprised in the satellite assistance information used for accessing the NTN.

5. The method according to claim 1 or 2, wherein the first information comprises fourth information, and
the fourth information comprises at least one of the following:
a seventh reference location, wherein the seventh reference location is a reference location of the serving cell;
an eighth reference location, wherein the eighth reference location is a reference location of the first candidate cell;
a fifth indication, wherein the fifth indication is used to indicate at least one of the following: the terminal needs to estimate the reference location of the serving cell, the terminal is enabled to estimate the reference location of the serving cell, and the terminal is requested to estimate the reference location of the serving cell;
a type of the serving cell;
a sixth indication, wherein the sixth indication is used to indicate at least one of the following: the terminal needs to estimate the reference location of the first candidate cell, the terminal is enabled to estimate the reference location of the first candidate cell, and the terminal is requested to estimate the reference location of the first candidate cell; and
a type of the first candidate cell.

6. The method according to claim 1 or 2, wherein the first information comprises fifth information, and the fifth information comprises at least one of the following:
a ninth reference location, wherein the ninth reference location is a reference location of the serving cell at a fifth time;
the fifth time;
ephemeris information of the serving cell;
at least one tenth reference location, wherein the tenth reference location is a reference location of one neighboring cell at a sixth time;
at least one sixth time, wherein one sixth time corresponds to one tenth reference location;
ephemeris information of at least one neighboring cell, wherein ephemeris information of one neighboring cell corresponds to one tenth reference location;
a seventh indication, wherein the seventh indication is used to indicate at least one of the following:
the terminal needs to estimate the reference location of the serving cell, the terminal is enabled to estimate the reference location of the serving cell, and the terminal is requested to estimate the reference location of the serving cell;
a type of the serving cell;
a type of at least one neighboring cell, wherein the type of one neighboring cell corresponds to one neighboring cell;
at least one eighth indication, wherein one eighth indication corresponds to one neighboring cell, and the eighth indication is used to indicate at least one of the following: the terminal needs to estimate a reference location of the neighboring cell, the terminal is enabled to estimate the reference location of the neighboring cell, and the terminal is requested to estimate the reference location of the neighboring cell;
frequency information of at least one neighboring cell; and
a PCI of at least one neighboring cell.

7. The method according to claim 1 or 2, wherein the first information comprises sixth information, and the sixth information comprises at least one of the following:
an eleventh reference location;
at least one twelfth reference location;
frequency information of at least one neighboring cell;
a PCI of at least one neighboring cell;
a ninth indication, wherein the ninth indication is used to indicate at least one of the following: the terminal needs to estimate a reference location of the serving cell, the terminal is enabled to estimate the reference location of the serving cell, and the terminal is requested to estimate the reference location of the serving cell;
a type of the serving cell;
at least one tenth indication, wherein one tenth indication corresponds to one neighboring cell, and the tenth indication is used to indicate at least one of the following: the terminal needs to estimate a reference location of the neighboring cell, the terminal is enabled to estimate the reference location of the neighboring cell, and the terminal is requested to estimate the reference location of the neighboring cell; and
a type of at least one neighboring cell, wherein the type of one neighboring cell corresponds to one neighboring cell, wherein
the eleventh reference location meets at least one of the following:
the eleventh reference location is the reference location of the serving cell at a seventh time; and
the eleventh reference location is the same as a thirteenth reference location, and the thirteenth reference location is the reference location of the serving cell at the seventh time, wherein
the seventh time is an epoch time of NTN assistance information of the serving cell, and the seventh time, the twelfth reference location, and the NTN assistance information of the serving cell are comprised in the satellite assistance information used for accessing the NTN; and
the twelfth reference location meets at least one of the following:
the twelfth reference location is a reference location of a second cell at an eighth time; and
the twelfth reference location is the same as a thirteenth reference location, and the thirteenth reference location is the reference location of the second cell at the eighth time, wherein
the eighth time is an epoch time of NTN assistance information of the second cell, the second cell is a cell that has a same frequency and a same PCI as the neighboring cell, and the eighth time, the thirteenth reference location, a fourteenth reference location, and the NTN assistance information of the second cell are comprised in the satellite assistance information used for accessing the NTN.

8. The method according to claim 1 or 2, wherein the first information comprises seventh information, and the seventh information comprises at least one of the following:
a fifteenth reference location, wherein the fifteenth reference location is a reference location of the serving cell;
a sixteenth reference location, wherein the sixteenth reference location is a reference location of one neighboring cell;
an eleventh indication, wherein the eleventh indication is used to indicate at least one of the following: the terminal needs to estimate the reference location of the serving cell, the terminal is enabled to estimate the reference location of the serving cell, and the terminal is requested to estimate the reference location of the serving cell;
a type of the serving cell;
at least one twelfth indication, wherein one twelfth indication corresponds to one neighboring cell, and the twelfth indication is used to indicate at least one of the following: the terminal needs to estimate a reference location of the neighboring cell, the terminal is enabled to estimate the reference location of the neighboring cell, and the terminal is requested to estimate the reference location of the neighboring cell;
a type of at least one neighboring cell, wherein the type of one neighboring cell corresponds to one neighboring cell;
frequency information of at least one neighboring cell; and
a PCI of at least one neighboring cell.

9. The method according to claim 3, wherein in a case that the first information comprises the second information, the obtaining, by a terminal, a reference location of a target cell based on first information comprises at least one of the following:
estimating, by the terminal, the reference location of the serving cell based on the second information; and
estimating, by the terminal, the reference location of the first candidate cell based on the second information.

10. The method according to claim 9, wherein the estimating, by the terminal, the reference location of the serving cell based on the second information comprises:
in a case that a first condition is met, estimating, by the terminal, the reference location of the serving cell based on the second information, wherein
the first condition comprises at least one of the following:
the type of the serving cell is an earth-moving cell; and
the second information comprises the first indication.

11. The method according to claim 9, wherein in a case that the second information comprises the first reference location, the first time, and the ephemeris information of the serving cell, the estimating, by the terminal, the reference location of the serving cell based on the second information comprises:
estimating, by the terminal, the reference location of the serving cell based on the first reference location, the first time, and the ephemeris information of the serving cell.

12. The method according to claim 9, wherein the estimating, by the terminal, the reference location of the first candidate cell based on the second information comprises:
in a case that a second condition is met, estimating, by the terminal, the reference location of the first candidate cell based on the second information, wherein
the second condition comprises at least one of the following:
the type of the first candidate cell is an earth-moving cell; and
the second information comprises the second indication.

13. The method according to claim 9, wherein in a case that the second information comprises the second reference location, the second time, and the ephemeris information of the first candidate cell, the estimating, by the terminal, the reference location of the first candidate cell based on the second information comprises:
estimating, by the terminal, the reference location of the first candidate cell based on the second reference location, the second time, and the ephemeris information of the first candidate cell.

14. The method according to claim 4, wherein in a case that the first information comprises the third information, the obtaining, by a terminal, a reference location of a target cell based on at least one of first information and satellite assistance information used for accessing an NTN comprises at least one of the following:
estimating, by the terminal, the reference location of the serving cell based on the third information and the satellite assistance information used for accessing the NTN; and
estimating, by the terminal, the reference location of the first candidate cell based on the third information and the satellite assistance information used for accessing the NTN.

15. The method according to claim 14, wherein the estimating, by the terminal, the reference location of the serving cell based on the third information and the satellite assistance information used for accessing the NTN comprises:
in a case that a third condition is met, estimating, by the terminal, the reference location of the serving cell based on the third information and the satellite assistance information used for accessing the NTN, wherein
the third condition comprises at least one of the following:
the type of the serving cell is an earth-moving cell; and
the third information comprises the third indication.

16. The method according to claim 14, wherein in a case that the third information comprises the third reference location and that the satellite assistance information used for accessing the NTN comprises ephemeris information of the serving cell and the third time, the estimating, by the terminal, the reference location of the serving cell based on the third information and the satellite assistance information used for accessing the NTN comprises:
estimating, by the terminal, the reference location of the serving cell based on the third reference location, the ephemeris information of the serving cell, and the third time.

17. The method according to claim 14, wherein the estimating, by the terminal, the reference location of the first candidate cell based on the third information and the satellite assistance information used for accessing the NTN comprises:
in a case that a fourth condition is met, estimating, by the terminal, the reference location of the first candidate cell based on the third information and the satellite assistance information used for accessing the NTN, wherein
the fourth condition comprises at least one of the following:
the type of the first candidate cell is an earth-moving cell; and
the third information comprises the fourth indication.

18. The method according to claim 14, wherein in a case that the third information comprises the fourth reference location and that the satellite assistance information used for accessing the NTN comprises ephemeris information of the first cell and the fourth time, the estimating, by the terminal, the reference location of the first candidate cell based on the third information and the satellite assistance information used for accessing the NTN comprises:
estimating, by the terminal, the reference location of the first candidate cell based on the fourth reference location, the ephemeris information of the first cell, and the fourth time.

19. The method according to claim 14, wherein in a case that the terminal re-obtains satellite assistance information used for accessing the NTN, the method further comprises at least one of the following:
estimating, by the terminal, the reference location of the serving cell based on the re-obtained satellite assistance information used for accessing the NTN, wherein the re-obtained satellite assistance information used for accessing the NTN comprises at least one of the following: a reference location of the serving cell at an eleventh time, the eleventh time, and ephemeris information of the serving cell, wherein the eleventh time is an epoch time of the NTN assistance information of the serving cell; and
estimating, by the terminal, the reference location of the first candidate cell based on the re-obtained satellite assistance information for accessing the NTN, wherein the re-obtained satellite assistance information for accessing the NTN comprises at least one of the following: a reference location of a fifth cell at a twelfth time, the twelfth time, and ephemeris information of the fifth cell, wherein the fifth cell is a cell that has a same frequency and a same PCI as the first candidate cell, and the twelfth time is an epoch time of the ephemeris information of the fifth cell.

20. The method according to claim 5, wherein in a case that the first information comprises the fourth information, the obtaining, by a terminal, a reference location of a target cell based on at least one of first information and satellite assistance information used for accessing an NTN comprises at least one of the following:
ignoring, by the terminal, at least part of the fourth information, and estimating, by the terminal, the reference location of the serving cell based on the satellite assistance information used for accessing the NTN; and
ignoring, by the terminal, at least part of the fourth information, and estimating, by the terminal, the reference location of the first candidate cell based on the satellite assistance information used for accessing the NTN.

21. The method according to claim 20, wherein the ignoring, by the terminal, at least part of the fourth information, and estimating, by the terminal, the reference location of the serving cell based on the satellite assistance information used for accessing the NTN comprises:
in a case that a fifth condition is met, ignoring, by the terminal, at least part of the fourth information, and estimating, by the terminal, the reference location of the serving cell based on the satellite assistance information used for accessing the NTN, wherein
the fifth condition comprises at least one of the following:
the type of the serving cell is an earth-moving cell; and
the fourth information comprises the fifth indication.

22. The method according to claim 20, wherein in a case that the fourth information comprises the seventh reference location and that the satellite assistance information used for accessing the NTN comprises a reference location of the serving cell at a ninth time, the ninth time, and ephemeris information of the serving cell, the ignoring, by the terminal, at least part of the fourth information, and estimating, by the terminal, the reference location of the serving cell based on the satellite assistance information used for accessing the NTN comprises:
ignoring, by the terminal, the seventh reference location, and estimating, by the terminal, the reference location of the serving cell based on the reference location of the serving cell at the ninth time, the ninth time, and the ephemeris information of the serving cell, wherein the ninth time is an epoch time of NTN assistance information of the serving cell.

23. The method according to claim 20, wherein the ignoring, by the terminal, at least part of the fourth information, and estimating, by the terminal, the reference location of the first candidate cell based on the satellite assistance information used for accessing the NTN comprises:
in a case that a sixth condition is met, ignoring, by the terminal, at least part of the fourth information, and estimating, by the terminal, the reference location of the first candidate cell based on the satellite assistance information used for accessing the NTN, wherein
the sixth condition comprises at least one of the following:
the type of the first candidate cell is an earth-moving cell; and
the fourth information comprises the sixth indication.

24. The method according to claim 20, wherein in a case that the fourth information comprises the eighth reference location and that the satellite assistance information used for accessing the NTN comprises a reference location of a third cell at a tenth time, the tenth time, and ephemeris information of the third cell, the ignoring, by the terminal, at least part of the fourth information, and estimating, by the terminal, the reference location of the first candidate cell based on the satellite assistance information used for accessing the NTN comprises:
ignoring, by the terminal, the eighth reference location, and estimating, by the terminal, the reference location of the first candidate cell based on the reference location of the third cell at the tenth time, the tenth time, and the ephemeris information of the third cell, wherein the third cell is a cell that has a same frequency and a same PCI as the first candidate cell, and the tenth time is an epoch time of NTN assistance information of the serving cell.

25. The method according to claim 14, wherein in a case that the terminal re-obtains satellite assistance information used for accessing the NTN, the method further comprises at least one of the following:
considering, by the terminal, that a most recently estimated reference location of the serving cell is the reference location of the serving cell; and
considering, by the terminal, that a most recently estimated reference location of the first candidate cell is the reference location of the first candidate cell.

26. The method according to claim 9, 14, 19, 20, or 25, wherein after obtaining the reference location of the serving cell or the reference location of the first candidate cell, the method further comprises at least one of the following:
performing, by the terminal, CHO trigger event evaluation based on the estimated reference location of the serving cell; and
performing, by the terminal, CHO trigger event evaluation based on the estimated reference location of the first candidate cell.

27. The method according to claim 6, wherein in a case that the first information comprises the fifth information, the obtaining, by a terminal, a reference location of a target cell based on first information comprises at least one of the following:
estimating, by the terminal, the reference location of the serving cell based on the fifth information; and
estimating, by the terminal, the reference location of the neighboring cell based on the fifth information.

28. The method according to claim 27, wherein the estimating, by the terminal, the reference location of the serving cell based on the fifth information comprises:
in a case that a seventh condition is met, estimating, by the terminal, the reference location of the serving cell based on the fifth information, wherein
the seventh condition comprises at least one of the following:
the type of the serving cell is an earth-moving cell; and
the fifth information comprises the seventh indication.

29. The method according to claim 27, wherein in a case that the fifth information comprises the ninth reference location, the fifth time, and the ephemeris information of the serving cell, the estimating, by the terminal, the reference location of the serving cell based on the fifth information comprises:
estimating, by the terminal, the reference location of the serving cell based on the ninth reference location, the fifth time, and the ephemeris information of the serving cell.

30. The method according to claim 27, wherein the estimating, by the terminal, the reference location of the neighboring cell based on the fifth information comprises:
in a case that an eighth condition is met, estimating, by the terminal, the reference location of the neighboring cell based on the fifth information, wherein
the eighth condition comprises at least one of the following:
the type of the neighboring cell is an earth-moving cell; and
the fifth information comprises the eighth indication corresponding to the neighboring cell.

31. The method according to claim 27, wherein in a case that the fifth information comprises the at least one tenth reference location, the at least one sixth time, and the ephemeris information of the at least one neighboring cell, the estimating, by the terminal, the reference location of the neighboring cell based on the fifth information comprises:
estimating, by the terminal, a reference location of a first neighboring cell based on one tenth reference location, one sixth time, and ephemeris information of one neighboring cell, wherein the first neighboring cell is a neighboring cell corresponding to the sixth time, the tenth reference location, and the ephemeris information of the neighboring cell.

32. The method according to claim 7, wherein in a case that the first information comprises the sixth information, the obtaining, by a terminal, a reference location of a target cell based on at least one of first information and satellite assistance information used for accessing an NTN comprises at least one of the following:
estimating, by the terminal, the reference location of the serving cell based on the sixth information and the satellite assistance information used for accessing the NTN; and
estimating, by the terminal, the reference location of the neighboring cell based on the sixth information and the satellite assistance information used for accessing the NTN.

33. The method according to claim 32, wherein the estimating, by the terminal, the reference location of the serving cell based on the sixth information and the satellite assistance information used for accessing the NTN comprises:
in a case that a ninth condition is met, estimating, by the terminal, the reference location of the serving cell based on the sixth information and the satellite assistance information used for accessing the NTN, wherein
the ninth condition comprises at least one of the following:
the type of the serving cell is an earth-moving cell; and
the sixth information comprises the ninth indication.

34. The method according to claim 32, wherein in a case that the sixth information comprises the eleventh reference location and that the satellite assistance information used for accessing the NTN comprises ephemeris information of the serving cell and the seventh time, the estimating, by the terminal, the reference location of the serving cell based on the sixth information and the satellite assistance information used for accessing the NTN comprises:
estimating, by the terminal, the reference location of the serving cell based on the eleventh reference location, the ephemeris information of the serving cell, and the seventh time.

35. The method according to claim 32, wherein the estimating, by the terminal, the reference location of the neighboring cell based on the sixth information and the satellite assistance information used for accessing the NTN comprises:
in a case that a tenth condition is met, estimating, by the terminal, the reference location of the neighboring cell based on the sixth information and the satellite assistance information used for accessing the NTN, wherein
the tenth condition comprises at least one of the following:
the type of the neighboring cell is an earth-moving cell; and
the sixth information comprises the tenth indication corresponding to the neighboring cell.

36. The method according to claim 32, wherein in a case that the sixth information comprises a twelfth reference location and that the satellite assistance information used for accessing the NTN comprises ephemeris information of the second cell and the eighth time, the estimating, by the terminal, the reference location of the neighboring cell based on the sixth information and the satellite assistance information used for accessing the NTN comprises:
estimating, by the terminal, a reference location of a second neighboring cell based on the twelfth reference location, the ephemeris information of the second cell, and the eighth time, wherein the second cell is a cell that has a same frequency and a same PCI as the second neighboring cell, and the twelfth reference location corresponds to the second neighboring cell.

37. The method according to claim 7, wherein in a case that the terminal re-obtains satellite assistance information for accessing the NTN, the method further comprises at least one of the following:
estimating, by the terminal, the reference location of the serving cell based on the re-obtained satellite assistance information for accessing the NTN, wherein the re-obtained satellite assistance information for accessing the NTN comprises at least one of the following: a reference location of the serving cell at a thirteenth time, the thirteenth time, and ephemeris information of the serving cell, wherein the thirteenth time is an epoch time of the NTN assistance information of the serving cell; and
estimating, by the terminal, a reference location of a third neighboring cell based on the re-obtained satellite assistance information for accessing the NTN, wherein the re-obtained satellite assistance information for accessing the NTN comprises at least one of the following: a reference location of a sixth cell at a fourteenth time, the fourteenth time, and ephemeris information of the sixth cell, wherein the sixth cell is a cell that has a same frequency and a same PCI as the third neighboring cell, and the fourteenth time is an epoch time of the ephemeris information of the sixth cell.

38. The method according to claim 8, wherein in a case that the first information comprises the seventh information, the obtaining, by a terminal, a reference location of a target cell based on at least one of first information and satellite assistance information used for accessing an NTN comprises at least one of the following:
estimating, by the terminal, the reference location of the serving cell based on the satellite assistance information used for accessing the NTN; and
estimating, by the terminal, the reference location of the neighboring cell based on the satellite assistance information used for accessing the NTN.

39. The method according to claim 38, wherein the estimating, by the terminal, the reference location of the serving cell based on the satellite assistance information used for accessing the NTN comprises:
in a case that an eleventh condition is met, estimating, by the terminal, the reference location of the serving cell based on the satellite assistance information used for accessing the NTN, wherein
the eleventh condition comprises at least one of the following:
the type of the serving cell is an earth-moving cell; and
the seventh information comprises the eleventh indication.

40. The method according to claim 38, wherein in a case that the seventh information comprises the fifteenth reference location and that the satellite assistance information used for accessing the NTN comprises a reference location of the serving cell at a fifteenth time, the fifteenth time, and ephemeris information of the serving cell, the estimating, by the terminal, the reference location of the serving cell based on the satellite assistance information used for accessing the NTN comprises:
ignoring, by the terminal, the fifteenth reference location, and estimating, by the terminal, the reference location of the serving cell based on the reference location of the serving cell at the fifteenth time, the fifteenth time, and the ephemeris information of the serving cell, wherein the fifteenth time is an epoch time of NTN assistance information of the serving cell.

41. The method according to claim 38, wherein the estimating, by the terminal, the reference location of the neighboring cell based on the satellite assistance information used for accessing the NTN comprises:
in a case that a twelfth condition is met, estimating, by the terminal, the reference location of the neighboring cell based on the satellite assistance information used for accessing the NTN, wherein
the twelfth condition comprises at least one of the following:
the type of the neighboring cell is an earth-moving cell; and
the seventh information comprises the twelfth indication corresponding to the neighboring cell.

42. The method according to claim 38, wherein in a case that the seventh information comprises the sixteenth reference location and that the satellite assistance information used for accessing the NTN comprises a reference location of a fourth cell at a twelfth time, the twelfth time, and ephemeris information of the fourth cell, the estimating, by the terminal, the reference location of the neighboring cell based on the satellite assistance information used for accessing the NTN comprises:
ignoring, by the terminal, the sixteenth reference location, and estimating, by the terminal, a reference location of a fourth neighboring cell based on the reference location of the fourth cell at the twelfth time, the twelfth time, and the ephemeris information of the fourth cell, wherein the fourth cell is a cell that has a same frequency and a same PCI as the fourth neighboring cell.

43. The method according to claim 37, wherein in a case that the terminal re-obtains satellite assistance information for accessing the NTN, the method further comprises at least one of the following:
considering, by the terminal, that a most recently estimated reference location of the serving cell is the reference location of the serving cell; and
considering, by the terminal, that a most recently estimated reference location of the third neighboring cell is the reference location of the third neighboring cell.

44. The method according to claim 27, 31, 32, 36, 37, 38, 42, or 43, wherein after obtaining the reference location of the serving cell or the reference location of the neighboring cell, the method further comprises at least one of the following:
performing, by the terminal, measurement reporting trigger event evaluation based on the estimated reference location of the serving cell; and
performing, by the terminal, measurement reporting trigger event evaluation based on the estimated reference location of the neighboring cell or the first neighboring cell or the second neighboring cell or the third neighboring cell or the fourth neighboring cell.

45. The method according to claim 1, wherein the terminal is in a connected state.

46. A communication processing method, comprising:
sending, by a network-side device, at least one of first information and satellite assistance information used for accessing an NTN to a terminal, wherein at least one of the first information and the satellite assistance information used for accessing the NTN is used to obtain a reference location of a target cell, the first information is used to obtain the reference location of the target cell, and the target cell comprises at least one of a first candidate cell, a serving cell, and a neighboring cell, wherein the first candidate cell is a candidate cell for conditional handover, and the neighboring cell is a neighboring cell of the serving cell.

47. The method according to claim 46, wherein the satellite assistance information used for accessing the NTN is carried by system information; and the first information is carried by dedicated signaling.

48. The method according to claim 46 or 47, wherein the first information comprises second information, and the second information comprises at least one of the following:
a first reference location, wherein the first reference location is a reference location of the serving cell at a first time;
the first time;
ephemeris information of the serving cell;
a second reference location, wherein the second reference location is a reference location of the first candidate cell at a second time;
the second time;
ephemeris information of the first candidate cell;
a first indication, wherein the first indication is used to indicate at least one of the following: the terminal needs to estimate the reference location of the serving cell, the terminal is enabled to estimate the reference location of the serving cell, and the terminal is requested to estimate the reference location of the serving cell;
a type of the serving cell;
a second indication, wherein the second indication is used to indicate at least one of the following:
the terminal needs to estimate the reference location of the first candidate cell, the terminal is enabled to estimate the reference location of the first candidate cell, and the terminal is requested to estimate the reference location of the first candidate cell; and
a type of the first candidate cell.

49. The method according to claim 46 or 47, wherein the first information comprises third information, and
the third information comprises at least one of the following:
a third reference location;
a fourth reference location;
a third indication, wherein the third indication is used to indicate at least one of the following: the terminal needs to estimate a reference location of the serving cell, the terminal is enabled to estimate the reference location of the serving cell, and the terminal is requested to estimate the reference location of the serving cell;
a type of the serving cell;
a fourth indication, wherein the fourth indication is used to indicate at least one of the following:
the terminal needs to estimate a reference location of the first candidate cell, the terminal is enabled to estimate the reference location of the first candidate cell, and the terminal is requested to estimate the reference location of the first candidate cell; and
a type of the first candidate cell, wherein
the third reference location meets at least one of the following:
the third reference location is the reference location of the serving cell at a third time; and
the third reference location is the same as a fifth reference location, and the fifth reference location is the reference location of the serving cell at the third time, wherein
the third time is an epoch time of NTN assistance information of the serving cell, and the third time, the fifth reference location, and the NTN assistance information of the serving cell are comprised in the satellite assistance information used for accessing the NTN; and
the fourth reference location meets at least one of the following:
the fourth reference location is the reference location of the first candidate cell at a fourth time; and
the fourth reference location is the same as a sixth reference location, and the sixth reference location is a reference location of a first cell at the fourth time, wherein
the fourth time is an epoch time of NTN assistance information of the first cell, the first cell is a cell that has a same frequency and a same physical cell identifier PCI as the first candidate cell, and the sixth reference location, the fourth time, and the NTN assistance information of the first cell are comprised in the satellite assistance information used for accessing the NTN.

50. The method according to claim 46 or 47, wherein the first information comprises fourth information, and
the fourth information comprises at least one of the following:
a seventh reference location, wherein the seventh reference location is a reference location of the serving cell;
an eighth reference location, wherein the eighth reference location is a reference location of the first candidate cell;
a fifth indication, wherein the fifth indication is used to indicate at least one of the following: the terminal needs to estimate the reference location of the serving cell, the terminal is enabled to estimate the reference location of the serving cell, and the terminal is requested to estimate the reference location of the serving cell;
a type of the serving cell;
a sixth indication, wherein the sixth indication is used to indicate at least one of the following: the terminal needs to estimate the reference location of the first candidate cell, the terminal is enabled to estimate the reference location of the first candidate cell, and the terminal is requested to estimate the reference location of the first candidate cell; and
a type of the first candidate cell.

51. The method according to claim 46 or 47, wherein the first information comprises fifth information, and the fifth information comprises at least one of the following:
a ninth reference location, wherein the ninth reference location is a reference location of the serving cell at a fifth time;
the fifth time;
ephemeris information of the serving cell;
at least one tenth reference location, wherein the tenth reference location is a reference location of one neighboring cell at a sixth time;
at least one sixth time, wherein one sixth time corresponds to one tenth reference location;
ephemeris information of at least one neighboring cell, wherein ephemeris information of one neighboring cell corresponds to one tenth reference location;
a seventh indication, wherein the seventh indication is used to indicate at least one of the following:
the terminal needs to estimate the reference location of the serving cell, the terminal is enabled to estimate the reference location of the serving cell, and the terminal is requested to estimate the reference location of the serving cell;
a type of the serving cell;
a type of at least one neighboring cell, wherein the type of one neighboring cell corresponds to one neighboring cell;
at least one eighth indication, wherein one eighth indication corresponds to one neighboring cell, and the eighth indication is used to indicate at least one of the following: the terminal needs to estimate a reference location of the neighboring cell, the terminal is enabled to estimate the reference location of the neighboring cell, and the terminal is requested to estimate the reference location of the neighboring cell;
frequency information of at least one neighboring cell; and
a PCI of at least one neighboring cell.

52. The method according to claim 46 or 47, wherein the first information comprises sixth information, and the sixth information comprises at least one of the following:
an eleventh reference location;
at least one twelfth reference location;
frequency information of at least one neighboring cell;
a PCI of at least one neighboring cell;
a ninth indication, wherein the ninth indication is used to indicate at least one of the following: the terminal needs to estimate a reference location of the serving cell, the terminal is enabled to estimate the reference location of the serving cell, and the terminal is requested to estimate the reference location of the serving cell;
a type of the serving cell;
at least one tenth indication, wherein one tenth indication corresponds to one neighboring cell, and the tenth indication is used to indicate at least one of the following: the terminal needs to estimate a reference location of the neighboring cell, the terminal is enabled to estimate the reference location of the neighboring cell, and the terminal is requested to estimate the reference location of the neighboring cell; and
a type of at least one neighboring cell, wherein the type of one neighboring cell corresponds to one neighboring cell, wherein
the eleventh reference location meets at least one of the following:
the eleventh reference location is the reference location of the serving cell at a seventh time; and
the eleventh reference location is the same as a thirteenth reference location, and the thirteenth reference location is the reference location of the serving cell at the seventh time, wherein
the seventh time is an epoch time of NTN assistance information of the serving cell, and the seventh time, the twelfth reference location, and the NTN assistance information of the serving cell are comprised in the satellite assistance information used for accessing the NTN; and
the twelfth reference location meets at least one of the following:
the twelfth reference location is a reference location of a second cell at an eighth time; and
the twelfth reference location is the same as a thirteenth reference location, and the thirteenth reference location is the reference location of the second cell at the eighth time, wherein
the eighth time is an epoch time of NTN assistance information of the second cell, the second cell is a cell that has a same frequency and a same PCI as the neighboring cell, and the eighth time, the thirteenth reference location, a fourteenth reference location, and the NTN assistance information of the second cell are comprised in the satellite assistance information used for accessing the NTN.

53. The method according to claim 46 or 47, wherein the first information comprises seventh information, and the seventh information comprises at least one of the following:
a fifteenth reference location, wherein the fifteenth reference location is a reference location of the serving cell;
a sixteenth reference location, wherein the sixteenth reference location is a reference location of one neighboring cell;
an eleventh indication, wherein the eleventh indication is used to indicate at least one of the following: the terminal needs to estimate the reference location of the serving cell, the terminal is enabled to estimate the reference location of the serving cell, and the terminal is requested to estimate the reference location of the serving cell;
a type of the serving cell;
at least one twelfth indication, wherein one twelfth indication corresponds to one neighboring cell, and the twelfth indication is used to indicate at least one of the following: the terminal needs to estimate a reference location of the neighboring cell, the terminal is enabled to estimate the reference location of the neighboring cell, and the terminal is requested to estimate the reference location of the neighboring cell;
a type of at least one neighboring cell, wherein the type of one neighboring cell corresponds to one neighboring cell;
frequency information of at least one neighboring cell; and
a PCI of at least one neighboring cell.

54. A communication processing apparatus, comprising:
a first obtaining module, configured to obtain a reference location of a target cell based on at least one of first information and satellite assistance information used for accessing an NTN, wherein
the first information is used to obtain the reference location of the target cell; and
the target cell comprises at least one of a first candidate cell, a serving cell, and a neighboring cell, wherein the first candidate cell is a candidate cell for conditional handover, and the neighboring cell is a neighboring cell of the serving cell.

55. A communication processing apparatus, comprising:
a sending module, configured to send at least one of first information and satellite assistance information used for accessing an NTN to a terminal, wherein at least one of the first information and the satellite assistance information used for accessing the NTN is used to obtain a reference location of a target cell, the first information is used to obtain the reference location of the target cell, and the target cell comprises at least one of a first candidate cell, a serving cell, and a neighboring cell, wherein the first candidate cell is a candidate cell for conditional handover, and the neighboring cell is a neighboring cell of the serving cell.

56. A communication device, comprising a processor, a memory, and a program or instructions stored in the memory and capable of running on the processor, wherein when the program or instructions are executed by the processor, the steps of the method according to any one of claims 1 to 53 are implemented.

57. A readable storage medium, wherein the readable storage medium stores a program or instructions, and when the program or instructions are executed by a processor of a terminal, the steps of the method according to any one of claims 1 to 53 are implemented.
